(19) Europäisches Patentamt / European Patent Office / Office européen des brevets

(11) **EP 2 257 380 B1**

## (12) FASCICULE DE BREVET EUROPEEN

(45) Date de publication et mention
de la délivrance du brevet:
**10.07.2013   Bulletin 2013/28**

(21) Numéro de dépôt: **09729989.5**

(22) Date de dépôt: **25.03.2009**

(51) Int Cl.:
**B05B 3/10** *(2006.01)*          **B05B 17/06** *(2006.01)*
**B05B 17/04** *(2006.01)*         **B01J 2/06** *(2006.01)*
**B01J 2/18** *(2006.01)*           **B05B 3/02** *(2006.01)*

(86) Numéro de dépôt international:
**PCT/FR2009/050510**

(87) Numéro de publication internationale:
**WO 2009/125129 (15.10.2009 Gazette 2009/42)**

(54) **PROCÉDÉ ET TÊTE DE PULVÉRISATION, PROCÉDÉ ET APPAREIL ASSOCIÉS POUR FABRIQUER UN PRODUIT PULVÉRULENT**

SPRÜHVERFAHREN UND SPRÜHKOPF, ENTSPRECHENDES VERFAHREN UND VORRICHTUNG ZUR HERSTELLUNG EINES PULVERFÖRMIGEN PRODUKTS

SPRAY METHOD AND HEAD, ASSOCIATED METHOD AND DEVICE FOR PRODUCING A PULVERULENT PRODUCT

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité:  **25.03.2008   FR 0801608**

(43) Date de publication de la demande:
**08.12.2010   Bulletin 2010/49**

(73) Titulaire: **Sprainnov**
**17000 La Rochelle (FR)**

(72) Inventeurs:
- **BUISSON, Pierre**
  **F-17140 Lagord (FR)**
- **GRIZEAU, Alain**
  **F-17000 La Rochelle (FR)**
- **RICHARD, Fabrice**
  **F-79000 Bessines (FR)**
- **CHICHEPORTICHE, Jean-Marc**
  **F-75017 Paris (FR)**
- **RENAUDEAUX, Jean-Pierre**
  **F-78460 Chevreuse (FR)**
- **ZAINOUN, Jean-Baptiste**
  **F-78470 Saint Remy Les-chevreuse (FR)**

(74) Mandataire: **Grosset-Fournier, Chantal Catherine et al**
**Grosset-Fournier & Demachy**
**54, rue Saint-Lazare**
**75009 Paris (FR)**

(56) Documents cités:
| | |
|---|---|
| **EP-A- 0 446 134** | **WO-A-2005/102537** |
| **GB-A- 909 474** | **JP-A- 5 184 994** |
| **JP-A- 2003 001 147** | |

- **NAJIB ZAINOUN, JEAN-MARC CHICHEPORTICHE ET JEAN-PIERRE RENAUDEAUX: "Contrôle dimensionnel des aérosols par piézoélectricité"[Online] 2004, XP002505890 Extrait de l'Internet: URL:http://www.spraysas.com/mecanotransduction%202004.pdf> [extrait le 2008-11-27]**
- **N. ZAINOUN, J.M. CHICHEPORTICHE, J.P. RENAUDEAUX: "The vibrating spinning disk"[Online] 8 décembre 2004 (2004-12-08), XP002505891 Paris Extrait de l'Internet: URL: http://www.spraysas.com/CFA%202004%20PARIS%207-8%20dec%2004.pdf> [extrait le 2008-11-27]**
- **ZAINOUN N, CHICHEPORTICHE J.M, RENAUDEAUX J.P: "Contrôle dimensionnel des aérosols par piézoélectricité" XXIXÈME CONGRÈS DE LA SOCIÉTÉ DE BIOMÉCANIQUE, [Online] 10 septembre 2004 (2004-09-10), XP002505892 Créteil - France Extrait de l'Internet: URL:http://www.spraysas.com/SB_2004.pdf> [extrait le 2008-11-27]**
- **J.M. CHICHEPORTICHE, N. ZAINOUN, J.P. RENAUDEAUX: "Fluids and Applications"[Online] XP002505893 Champs-sur-Marne - France Extrait de l'Internet: URL:http://www.spraysas.com/BRG.pdf> [extrait le 2008-11-27]**

**Description**

La présente invention concerne un procédé de pulvérisation ou atomisation par éjection centrifuge d'une substance comprenant au moins un composant liquide, placée sur un corps rotatif entraîné à une vitesse de rotation appropriée. Dans la suite, les mots « pulvérisation » et « atomisation » sont utilisés comme des synonymes pour désigner la formation d'un brouillard de gouttelettes.

L'aérosol obtenu avec un tel procédé peut être directement utile, par exemple dans des applications de peinture, pulvérisation d'engrais ou autres substances utilisées dans l'agriculture, pulvérisation dans l'atmosphère par exemple pour traiter l'air ambiant contre les insectes, les mauvaises odeurs, les germes etc.

Dans d'autres applications, l'aérosol est destiné à subir un traitement ultérieur de séchage (« spray-drying »), ou de figeage (« spray-cooling » ou « prilling »), notamment à des fins de micro-encapsulation. On obtient un produit solide pulvérulent, qui peut être un produit final, ou au contraire un produit intermédiaire destiné à subir au moins un traitement ou transformation ultérieur.

Ainsi, la présente invention concerne en outre un procédé plus large comprenant une opération de pulvérisation associée à une opération de traitement de l'aérosol avec un flux gazeux pour obtenir un produit pulvérulent.

La présente invention concerne également une tête de pulvérisation ou d'atomisation pour la mise en oeuvre de l'un ou l'autre procédé.

La présente invention concerne aussi un appareil de traitement utilisant une tête de pulvérisation et lui associant des moyens pour appliquer un traitement aux particules d'aérosol.

L'invention concerne notamment les aérosols ou les poudres monodisperses. On nomme ainsi les aérosols ou les poudres dont sensiblement toutes les particules (gouttelettes ou respectivement grains) ont sensiblement une même dimension (un même diamètre si l'on admet que les particules sont sphériques) que l'on souhaite pouvoir choisir. L'invention concerne également les aérosols ou les poudres à polydispersité dite contrôlée ou maîtrisée. On nomme ainsi les aérosols ou les poudres dont sensiblement toutes les particules ont une dimension (diamètre) appartenant à une gamme relativement étroite. L'invention concerne encore les aérosols ou les poudres pluridisperses, c'est-à-dire dont quasiment toutes les particules ont l'une ou l'autre de quelques dimensions (diamètres) prédéterminées, ou appartiennent à l'une ou l'autre de quelques plages étroites de dimensions (diamètres) prédéterminées.

On connaît des procédés de préparation d'une composition capable de séchage ou de figeage (composition destinée à être mise sous forme solide) pour la production de poudres monodisperses ou à polydispersité contrôlée pour des applications agro-alimentaires, nutritionnelles, cosmétiques, pharmaceutiques et de la chimie fine, mettant en oeuvre la production de gouttes pour l'obtention de produits solides monodisperses ou à polydispersité contrôlée.

On connaît des procédés de préparation d'une composition de séchage ou de figeage et de production de poudres micro-encapsulées pour des applications agro-alimentaires, nutritionnelles, cosmétiques, pharmaceutiques et de la chimie fine.

Les procédés de micro-encapsulation sont principalement de deux types :

- Procédé d'intégration : l'actif à encapsuler et la matrice d'encapsulation sont intégrés en masse par mélange intime offrant ainsi une micro-encapsulation partielle du fait de la présence en surface de molécules d'actif non encapsulées.
- Procédé de micro-encapsulation filmogène : l'actif est intégralement enrobé par une matrice filmogène.

Le procédé de co-séchage consiste à co-pulvériser dans une tour d'atomisation un ou plusieurs liquides, tout en injectant dans le même temps un flux de poudre susceptible de servir de support et/ou diluant au produit liquide à sécher.

Pour la production d'aérosols, le EP 0 446 134 B1 enseigne de déposer un liquide au centre de rotation d'une surface d'éjection s'étendant jusqu'à un bord d'éjection périphérique. La surface d'éjection et en particulier le bord d'éjection présentent une symétrie de révolution autour du centre de rotation. Par l'effet centrifuge, la substance forme sur la surface d'éjection une nappe liquide qui glisse vers le bord d'éjection. Lorsqu'elle parvient au bord du disque, la nappe peut se fractionner en filets régulièrement répartis sur la périphérie. À leur tour, les filets se fractionnent en gouttelettes. Le document enseigne également qu'un tel aérosol peut être rendu monodisperse en appliquant au liquide une excitation vibratoire. Plus la fréquence est élevée, plus les gouttelettes obtenues sont fines. D'autres paramètres conditionnent également le diamètre des gouttelettes, en particulier la viscosité du liquide, sa température, son débit, le diamètre et la vitesse de rotation de la surface d'éjection, la nature et l'état de surface de la face d'éjection, la configuration du bord d'éjection, etc.

La pulvérisation par éjection centrifuge sur un corps rotatif permet de réaliser des débits élevés avec des moyens relativement simples sans être exposé aux risques de bouchage présentés par d'autres techniques telles que les buses.

Toutefois, les moyens d'excitation vibratoire employés suivant le document précité sont perfectibles en termes de coût, et/ou efficacité, et/ou plage de fréquences réalisables.

Le WO 2005/102 537 enseigne d'intercaler un vibreur entre le corps rotatif et son moteur d'entraînement de façon à impartir au corps rotatif la vibration grâce à laquelle l'aérosol généré est monodisperse.

Compte tenu de la masse à mettre en vibration, et de la fréquence propre relativement basse de la partie vibrante, l'énergie vibratoire à fournir est relativement grande et la fréquence maximale pratiquement réalisable relativement faible. Ce dispositif ne permet pas d'obtenir les plus petites tailles de gouttelettes pouvant être souhaitées en pratique.

Suivant ces deux documents, la surface d'éjection est tournée en direction essentiellement opposée au moteur d'entraînement en rotation. La substance à pulvériser arrive sur la surface d'éjection par le côté opposé au moteur. Cette implantation est pénalisante dans certaines installations car elle nécessite des raccordements fluidiques, électriques et/ou mécaniques de part et d'autre du plan de formation de l'aérosol.

Le WO 2006/131 629 décrit un dispositif autonome de pulvérisation à disque tournant. Dans certaines versions destinées à flotter sur un plan d'eau, l'arbre moteur est creux et sert de conduit d'alimentation ascendant traversant axialement le moteur et le corps rotatif pour déboucher par un orifice sur la surface du corps rotatif orientée en direction essentiellement opposée au moteur.

Le brevet britannique GB 909 474 du 31/10/1962 décrit en relation avec sa figure 7 un dispositif de répartition comportant un disque tournant sur lequel est amené le produit à répartir. Le produit est distribué au centre du disque par une buse. Un cristal C entourant la buse applique une vibration au centre du disque.

Le brevet japonais JP 184994 décrit un dispositif de répartition par exemple d'une peinture. Le dispositif comporte un plateau entraîné en rotation par un moteur. Le matériau à disperser est introduit sur le plateau par un tuyau concentrique d'un arbre d'entraînement en rotation du plateau. Un vibreur est appliqué à l'arbre ce qui a pour effet d'impartir une vibration au plateau. Un champ électrostatique est créé entre les objets à peindre et le plateau pour que la peinture soit guidée vers lesdits objets.

La demande de brevet JP 2003 00 1147 décrit une machine pour atomiser une peinture. La machine comprend une cloche d'atomisation, entraînée en rotation par un arbre. La peinture est délivrée à la cloche par une pompe. Un vibreur entoure l'arbre de façon à lui imprimer une vibration ultrasonique qui est transmise à la partie centrale de la cloche.

Les têtes de pulvérisation connues ne permettent pas de réaliser des gouttelettes ou particules comportant plusieurs composants, comme par exemple des mélanges, structurés ou non, ou encore des particules structurées, par exemple encapsulées, etc.

Une autre limitation des procédés et têtes de pulvérisation connus concerne le débit de liquide qu'ils sont capables de pulvériser. Il existe un besoin, notamment industriel, de produire des débits plus élevés avec des têtes de pulvérisation à centrifugation.

Il existe aussi un besoin pour préparer des compositions agro-alimentaires, nutritionnelles, cosmétiques, pharmaceutiques et de la chimie fine, personnalisées par leur caractère monodisperse ou à polydispersité contrôlée dont le diamètre peut être choisi entre 20 et 2000 $\mu$m, et notamment micro-encapsulées, et ce, d'une manière fiable et relativement simple pour faciliter l'utilisation des produits servant à préparer ces compositions, améliorer leur stabilité dans le temps, masquer des goûts indésirables, leur conférer des propriétés à effet retard, ou de biodisponibilité contrôlée.

Il existe un besoin de perfectionner les procédés de production de préparation de compositions agro-alimentaires, nutritionnelles, cosmétiques, pharmaceutiques et de la chimie fine.

Le but de la présente invention est de proposer des solutions à tout ou partie des problèmes ainsi posés au regard de l'état de la technique et en particulier d'élargir le champ d'application de la pulvérisation ou atomisation par corps rotatif.

Suivant le premier aspect de l'invention, le procédé pour générer un aérosol à partir d'au moins une substance, dans lequel :

- on met en rotation un corps rotatif présentant au moins une surface d'éjection, terminée par un bord d'éjection périphérique,
- on amène la substance sur la surface d'éjection pendant la rotation du corps rotatif, et
- on entretient une vibration dans le corps rotatif,

est caractérisé en ce que la vibration fait osciller la région du bord d'éjection par rapport à une région centrale du corps, rotatif par application d'une excitation du corps rotatif dans la région du bord d'éjection.

Une telle vibration est beaucoup moins consommatrice d'énergie que les techniques connues antérieurement car la masse à faire vibrer est plus faible. En outre, la vibration selon l'invention correspond à une déformation du corps rotatif. Le coefficient élastique caractérisant cette déformation peut être très élevé. La conjonction d'une masse vibratoire faible et d'un coefficient élastique élevé correspond à une fréquence propre nettement accrue. Des fréquences de vibration de l'ordre de 100 kHz, ou même supérieures, deviennent réalisables. Il est en particulier avantageux d'appliquer une fréquence d'excitation proche de la fréquence propre associée au mode de déformation qui est activé par l'excitation. La structure selon l'invention permet ainsi de réaliser un aérosol monodisperse avec une très petite taille de gouttelettes, par exemple 0,02 mm.

Suivant une autre particularité de l'invention, on réalise grâce à une tête de pulvérisation à corps rotatif un aérosol composite en alimentant la tête avec plusieurs composants. Ces composants peuvent être des substances que l'on dépose séparément au centre de surfaces d'éjection respectives. Les surfaces d'éjection peuvent avoir un bord périphérique commun. Les substances peuvent alors se mélanger lorsqu'elles franchissent le bord d'éjection commun, puis former des gouttelettes contenant un mélange, homogène ou non, de ces substances. Au moins deux surfaces d'éjection peuvent également avoir chacune leur propre bord périphérique, de sorte que chaque surface d'éjection forme ses propres gouttelettes. Si l'on applique une fréquence vibratoire pour favoriser une taille prédéterminée des gouttelettes, cette taille peut être différente, ou au contraire égale, pour les deux substances. Il est encore possible de mélanger les composants avant de les déposer au centre d'une surface d'éjection commune, ou au moment de les déposer au centre d'une surface d'éjection commune. L'un des composants peut être une poudre et l'autre un liquide. Les particules de la poudre roulent sur la surface d'éjection en se recouvrant du composant liquide, puis sont éjectées sous forme de particules enrobées destinées soit à conserver leur hétérogénéité, notamment pour la fabrication de particules micro-encapsulées, soit à évoluer vers une forme différente, par exemple par dissolution de la particule solide dans le liquide qui l'enrobe, ou encore par réaction chimique entre les deux composants.

L'invention envisage également des têtes de pulvérisation équipées d'au moins deux surfaces d'éjection, par exemple les deux faces opposées d'un même corps rotatif ou encore des faces portées par plusieurs corps rotatifs. On peut alimenter les au moins deux surfaces d'éjection avec une même substance pour doubler ou multiplier la production d'aérosol. On peut également alimenter les différentes surfaces d'éjection avec des substances différentes, solide, liquide ou gazeuse pour augmenter les possibilités en matière de combinaisons de substances. En particulier, il est prévu de pouvoir alimenter chaque surface d'éjection indépendamment des autres, et de pouvoir régler le débit et la granulométrie d'aérosol associés à chaque surface indépendamment de ceux associés aux autres surfaces. On peut également configurer les surfaces d'éjection et/ou les bords d'éjection différemment les uns des autres. Par exemple, une surface d'éjection peut être lisse, une autre striée, un bord d'éjection peut être continu, un autre denté.

L'invention vise également la fabrication de poudres en formant un aérosol par éjection centrifuge d'une ou plusieurs substances sur une ou plusieurs surfaces rotatives d'éjection, et traitement quasi-simultané de cet aérosol par un flux gazeux qui vient rencontrer la zone de formation de l'aérosol. Le flux gazeux peut être un flux d'air, par exemple pour sécher les gouttelettes et les transformer ainsi en des grains solides.

Le flux de traitement peut avoir une forme tubulaire sensiblement coaxiale avec le corps rotatif d'éjection, et rencontrer la zone de formation de l'aérosol tout autour du corps d'éjection.

Suivant un autre aspect de l'invention, la tête de pulvérisation comprenant :

-- un corps rotatif relié à un moteur d'entraînement en rotation autour d'un axe de rotation et portant solidairement au moins une surface d'éjection terminée par un bord périphérique d'éjection,
-- des moyens d'acheminement d'au moins une substance jusque sur l'au moins une surface d'éjection,
-- des moyens d'excitation pour générer une vibration de la surface d'éjection,

est caractérisée en ce que les moyens d'excitation sont conçus pour faire vibrer le bord d'éjection par déformation vibratoire du corps rotatif, ces moyens d'excitation jouxtant le corps rotatif à proximité du bord d'éjection.

Suivant une particularité de l'invention, dans une tête de pulvérisation fonctionnant par éjection centrifuge d'au moins une substance sur une surface d'éjection rotative, les moyens d'acheminement sont au moins en partie aménagés à l'intérieur d'un arbre creux d'entraînement du corps rotatif à partir d'un moteur d'entraînement. Les moyens d'acheminement peuvent canaliser séparément dans l'arbre creux, de préférence par des conduits concentriques, au moins deux substances ou composants distincts que l'on peut ensuite faire se mélanger dans l'arbre creux ou au contraire que l'on peut conduire chacun séparément jusqu'à des faces d'éjection respectives. Une surface d'éjection terminale, tournée en direction opposée au moteur, peut être traversée par un orifice d'acheminement central par lequel débouche l'espace intérieur de l'arbre creux ou un conduit logé dans celui-ci. Une surface d'éjection tournée vers le moteur et/ou placée entre deux corps rotatifs se succédant axialement, peut être associée à des orifices d'acheminement ménagés à travers la paroi de l'arbre creux ou associés à au moins un trajet d'acheminement formé autour du moteur et débouchant par une fente annulaire face à la jonction de la surface d'éjection avec l'arbre creux. Cet aspect de l'invention permet de placer le moteur d'entraînement entre les corps rotatifs d'une part et la ou les sources de substance autre part. On évite ainsi la nécessité de raccordements arrivant par le côté du ou des corps rotatifs opposé au moteur. La tête de pulvérisation peut alors former un ensemble compact monobloc relativement facile à installer dans son environnement industriel.

De préférence, les moyens d'entraînement, les moyens d'acheminement, et les moyens d'excitation sont entièrement situés d'un même côté par rapport à la surface d'éjection.

Suivant un autre aspect de l'invention, l'appareil de production d'une substance pulvérulente est caractérisé en ce qu'il comprend une enceinte, au moins une tête de pulvérisation selon l'invention, montée dans l'enceinte, des moyens pour générer un flux gazeux de traitement qui rencontre la zone de formation de l'aérosol dans l'enceinte, et au moins un orifice de collecte de la substance traitée et du gaz de traitement usé.

Il peut y avoir une tête de pulvérisation, par exemple en position centrale, ou plusieurs têtes, par exemple trois têtes de pulvérisation disposées en triangle.

La présente invention concerne en particulier les compositions agro-alimentaires, nutritionnelles, cosmétiques, pharmaceutiques et de la chimie fine, et plus particulièrement celles obtenues par la circulation d'un produit ou plusieurs produits, dont au moins un des produits est liquide, au sein d'une ou plusieurs enceintes et dispersés par l'intermédiaire d'un disque tournant vibré, sous forme de gouttes monodisperses ou à polydispersité contrôlée dans un fluide gazeux chauffé circulant au contact de ces gouttes et permettant par le séchage par entraînement, la production de particules solides monodisperses ou à polydispersité contrôlée, et notamment micro-encapsulées. Ces particules peuvent être mono-matières ou composites. Lors des opérations de séchage, il est possible que la surface des particules sèches présente des cratères induisant une porosité plus ou moins importante influant directement sur les propriétés de mouillabilité et d'instantanéité de solubilisation des particules monodisperses ou à polydispersité contrôlée.

La présente invention concerne également les compositions agro-alimentaires, nutritionnelles, cosmétiques, pharmaceutiques et de la chimie fine, et plus particulièrement celles obtenues par la production, à l'aide d'au moins un corps (tel que disque) tournant vibré, de particules liquides et/ou solides, monodisperse ou à polydispersité contrôlée, dont au moins un des composants est liquide, au sein d'une enceinte sous forme de gouttes dans un fluide gazeux dont la température est choisie inférieure à la température de fusion, pour le figeage et la production de particules solides monodisperses ou à polydispersité contrôlée, dont le diamètre peut notamment être choisi entre 20 et 2000 $\mu$m et pouvant notamment être micro-encapsulées. Ces particules peuvent être mono-matières ou composites.

Une autre forme de l'invention comprend une première mise en oeuvre de l'un ou l'autre des procédés décrits ci-dessus pour mettre sous forme de sphères monodisperses ou à polydispersité contrôlée un ou plusieurs actifs ayant initialement une forme hétérogène non sphérique et une granulométrie polydisperse, puis une deuxième mise en oeuvre de l'un ou l'autre des procédés décrits ci-dessus pour micro-encapsuler ces sphères.

Une autre forme de l'invention concerne la micro-encapsulation de solides divisés à l'échelle nanométrique que l'on intègre dans une matrice lipidique à haut point de fusion pour produire des particules monodisperses ou à polydispersité contrôlée dont on peut choisir le diamètre entre 20 et 2000 $\mu$m.

A titre d'exemple, la présente invention concerne les compositions mono-disperses à base d'un ou plusieurs actifs thermosensibles tels que des pro-biotiques, présentant des caractères de revivifiabilité directement fonction du temps de séjour à une température comprise entre 30 °C et 90°C. Or le caractère thermosensible de telles compositions limite le choix des matières grasses à haut point de fusion convenant pour leur micro-encapsulation. Le mélange du pro-biotique avec la matière grasse en fusion ne doit pas être trop longtemps exposé à une température létale. De manière surprenante il a été constaté que le procédé décrit ci-dessus permet de réduire le temps de contact du milieu pro-biotique avec la matière grasse en fusion à des valeurs comprises entre 10 à 1000 millisecondes (de préférence entre 15 et 100 millisecondes), et d'obtenir, à partir de moûts de fermentation présentant des concentrations initiales en pro-biotiques comprises entre $10^5$ et $10^{12}$, des compositions sèches monodisperses ou à polydispersité contrôlée, dont le diamètre peut être choisi entre 20 et 2000 $\mu$m, de pro-biotiques à partir de souches pures ou de mélanges de souches présentant des taux de revivifiabilité compris entre environ $10^4$ à $10^5$ et environ $10^{11}$ à $10^{12}$, ce qui correspond donc à des pertes inférieures à un log. Chaque particule présente des caractéristiques uniformes permettant la division d'un lot en nombreux sous-lots homogènes et de mêmes caractéristiques que le lot « père », et des propriétés d'écoulement remarquables.

Le calibrage très homogène et la granulométrie pouvant être très fine permettent de réduire considérablement le temps d'exposition des substances sensibles à la chaleur tout en garantissant, mieux que précédemment, les qualités physico-chimiques et biologiques du produit obtenu.

A titre d'autre exemple, la présente invention concerne les compositions pulvérulentes à base d'une ou plusieurs huiles essentielles présentant un caractère monodisperse ou à polydispersité contrôlée, dont le diamètre peut être choisi entre 20 et 2000 $\mu$m, micro-encapsulées selon le procédé de l'invention par injection concomitante d'une matrice à base de matières grasses à haut point de fusion, sans que le contact entre les huiles essentielles et la matière grasse en fusion apporte des modifications ou des dégradations par une exposition trop longue à une température trop élevée des fractions volatiles les plus légères de l'huile essentielle ou du mélange d'huiles essentielles. Le caractère monodisperse ou à polydispersité contrôlée des produits obtenus permet de maîtriser des taux de pénétration ou de diffusion ; ainsi dans le domaine cosmétique, l'utilisation de telles préparations d'huiles essentielles monodisperses apporte des garanties supplémentaires contre les risques de franchissement de la barrière épithéliale pour les applications dites de médecine d'amélioration ; on élimine ainsi en grande partie les problèmes posés par les nanoparticules dans le domaine des cosmétiques et le devenir de ces particules ultra-fines pouvant franchir aléatoirement la barrière dermique avec risque de pénétration dans les tissus vitaux sous-jacents. (Voir « Nano derm research project » financé par la Commission Européenne). De manière surprenante, la structure des particules solides obtenues se présente sous la forme de sphères parfaitement sphériques, dont le diamètre moyen D peut être compris généralement entre 20 et 2000 $\mu$m, avec un span

compris entre 0,12 et 0,25 (le sens du mot « span » sera précisé plus loin).

A titre d'autre exemple, la présente invention concerne les compositions à base d'une ou plusieurs enzymes présentant une granulométrie monodisperse ou à polydispersité contrôlée dont le diamètre peut être choisi entre 20 et 2000 $\mu$m et dont la fonction enzymatique doit être protégée soit par une micro-encapsulation en masse ou/et par une matrice filmogène ; à titre d'exemple particulier, la SOD, enzyme à fonction anti-oxydante, la papaine etc...

Ces enzymes ou mélanges d'enzymes peuvent également être utilisés en alimentation humaine ou animale ou dans le cadre de processus intégrés. Ils présentent grâce à l'invention des taux de résistance à la compression qui sont homogènes d'une particule à une autre. Après passage dans des presses à comprimer pour la production de granulés destinés à l'alimentation animale on observe un taux de dégradation de l'activité enzymatique largement inférieur à ce que l'on observe pour des produits obtenus avec des granulométries polydisperses non maîtrisées.

A titre d'autres exemples la présente invention concerne les compositions d'extraits de plantes ou d'actifs pharmaceutiques à granulométrie monodisperse ou à polydispersité contrôlée, présentant des caractères de biodisponibilité renforcée ou préservée, et ce par la maîtrise de la sélection de la granulométrie monodisperse ou à polydispersité contrôlée ou le mélange de plusieurs granulométries monodisperses ou à polydispersité contrôlée dont le ou les diamètre (s) peu(ven)t être choisi(s) entre 20 et 2000 $\mu$m.

A titre d'autres exemples, la présente invention concerne les compositions de pré-biotiques à caractère monodisperse ou à polydispersité contrôlée dont la granulométrie est choisie pour optimiser les cinétiques de fermentation. A titre d'exemple la production d'une poudre de lactulose mono-disperse stable et instantanément dispersible permet d'obtenir des effets pré-biotiques homogènes dans la production de yaourts enrichis en poudre de lactulose monodisperse ou à polydispersité contrôlée dont le diamètre peut être choisi entre 20 et 2000 $\mu$m.

A titre d'autre exemple, la présente invention concerne les compositions de poudres de vitamines monodisperse ou à polydispersité contrôlée et notamment de vitamines liposolubles (exemples : riboflavine, Vitamine E, Vitamine D3) : moindre dégradation de l'activité vitaminique lors des opérations de « prilling » (solidification par figeage).

A titre d'autres exemples, la présente invention concerne les compositions à base de composés flavonoïdes, stérols, phytostérols, caroténoïdes, acides gras poly-insaturés (exemples : asthaxanthine, hespéridine, $\Omega 3$ , $\Omega 6$).

A titre d'autre exemple, la présente invention concerne les compositions présentant un ou plusieurs actifs inclus dans un composé lipidique à haut point de fusion, avec un effet supplémentaire de « marquant visuel à effet actif». De telles compositions sont typiquement destinées à être maintenues en suspension dans les shampoings, les lotions et les crèmes. Suivant un autre exemple, la présente invention concerne les compositions de substances minérales sous forme de liquides ou suspensions (slurry) telles que céramiques, terres rares, talc, monodisperses ou à polydispersité contrôlée permettant d'optimiser les propriétés de compressibilité, de porosité et de frittage, ainsi que les mêmes propriétés après calcination.

A titre d'exemple la présente invention concerne les compositions gélifiantes à base de gommes (gomme arabique, gomme guar, alginates, carrhagénanes,..) de gélatine animale ou végétale, et de polysaccharides à caractère gélifiant.

A titre d'exemple la présente invention concerne les compositions aromatiques ou parfumantes avec préservation des fractions volatiles les plus légères grâce à une meilleure micro-encapsulation des arômes de tête. Ceci est particulièrement intéressant pour des produits naturels frais où les notes de tête sont particulièrement fragiles et volatiles.

Les exemples mentionnés ci-dessus peuvent également être combinés entre eux pour des applications nutritionnelles, alimentaires, cosmétiques, pharmaceutiques ou de la chimie fine.

L'invention propose ainsi, notamment, un procédé de préparation d'une composition agro-alimentaire, nutritionnelle, cosmétique, pharmaceutique et de la chimie fine, comportant les étapes consistant à :

-- associer au moins un disque ou autre corps vibro-rotatif et une tour de prilling (figeage) ;
-- co-déposer deux produits, liquide-liquide ou solide-liquide au centre de l'au moins un disque vibro-rotatif pour obtenir un mélange instantané des deux produits par effet vortex et leur pulvérisation en aérosol.

Le mélange a lieu typiquement dans un canal d'adduction central avec un temps de séjour pouvant être modifié par réglage ou choix de la longueur du canal central ; en sortie de canal le mélange roule sur lui-même sur le disque vibrant avec effet d'enrobage en continu par le produit filmogène judicieusement choisi.

De même et de manière surprenante, l'association d'un disque ou autre corps vibro-rotatif et d'une tour de séchage initialement conçue et équipée pour réaliser des opérations de séchage par atomisation soit au moyen de buses soit de turbines, permet de produire des opérations de co-séchage pour l'obtention de poudres monodisperses ou à polydispersité contrôlée et/ou pour l'amélioration des span standards (on définira plus loin la notion de span). Cette association peut au choix consister à intégrer un disque vibro-rotatif, notamment à canal central, sur une tour d'atomisation dite simple effet, une tour double effet, dite à fond W, une tour à effet multiple intégrant un étage de fluidisation en bas de tour, et un ou plusieurs vibro-fluidiseurs. Le procédé consiste en la conception originale d'un ensemble disque vibro-rotatif intégrant des systèmes d'injection de poudre (de granulométrie multidisperse ou monodisperse ou à polydispersité contrôlée) dans un brouillard de gouttes mono-disperses ou à polydispersité contrôlée afin d'obtenir des particules présentant des concentrations uniformément réparties à l'échelle de chaque particule mono-disperse ou à polydispersité contrôlée.

La taille monodisperse ou à polydispersité contrôlée des particules ainsi obtenue permet d'éviter les risques d'effets hétérogènes liés aux cinétiques différentielles de transfert des actifs micro-encapsulés, liées à des particules qui sont soit trop grosses et ne passent donc pas la barrière désirée, soit trop petites et traversent trop vite ou encore traversent des épaisseurs supérieures, par exemple au niveau des cellules épithéliales de l'intestin, ou encore au niveau du derme pour des actions externes.

Il est ainsi possible, par exemple, de cibler une dimension de particules finales monodisperses de taille 70 $\mu$m avec un span de 0,15, garantissant un seuil de pénétration déterminé et/ou une vitesse de transfert intra-membranaire optimisée en tenant compte des cinétiques de biodisponibilité recherchées.

D'un point de vue statistique, le degré de dispersion d'un échantillonnage de N particules de diamètre Di est communément caractérisé par une distribution gaussienne normale dont la déviation standard $\alpha$ est décrite ci-dessous :

L'écart-type $\sigma$ d'un échantillonnage de N particules de diamètre $D_i$ peut être donné par la formule suivante :

$$\sigma = \sqrt{\frac{1}{N}\sum_{i=1}^{N}\left(D_i - \bar{D}_{pq}\right)^2}$$

$$= \sqrt{\frac{1}{N}\sum_{i=1}^{N}D_i^{\,2} - 2\bar{D}_{pq}\frac{1}{N}\sum_{i=1}^{N}D_i + \bar{D}_{pq}^{\,2}}$$

$$= \sqrt{\bar{D}_{20}^{\,2} - \left(2\bar{D}_{10} - \bar{D}_{pq}\right)\bar{D}_{pq}}$$

*avec*

$$\bar{D}_{pq} = \left(\frac{\displaystyle\sum_{i=1}^{N}D_i^{\,p}}{\displaystyle\sum_{i=1}^{N}D_i^{\,q}}\right)^{\frac{1}{p-q}}$$

$$\bar{D}_{10} = \left(\frac{1}{N}\sum_{i=1}^{N}D_i\right) \quad et \quad \bar{D}_{20} = \sqrt{\frac{1}{N}\sum_{i=1}^{N}D_i^{\,2}}$$

$\bar{D}_{pq}$ est le diamètre moyen par rapport auquel on calcule notre dispersion :

❖ $\bar{D}_{pq} = \bar{D}_{10}$ pour une distribution granulométrique en nombre, d'où l'écart-type en nombre $\sigma_n$ peut être donné par la formule :

$$\sigma_n = \sqrt{\bar{D}_{20}^{\,2} - \bar{D}_{10}^{\,2}}$$

$$( 1 )$$

❖ $\bar{D}_{pq} = \bar{D}_{50}$ pour une distribution granulométrique en volume, d'où l'écart-type en volume $\sigma_v$ peut être donné par la formule :

$$\sigma_v = \sqrt{\bar{D}_{20}^{\,2} - \left(2\bar{D}_{10} - \bar{D}_{50}\right)\bar{D}_{50}}$$

$$( 2 )$$

D'un point de vue statistique le degré de dispersion d'un échantillonnage de N particules de diamètre $D_i$ est communément caractérisé par une distribution Gaussienne normale dont la déviation standard relative $\alpha$ est :

$$En\ nombre \qquad \alpha_n = \frac{\sigma_n}{\bar{D}_{10}} = \frac{\sqrt{\bar{D}_{20}^2 - \bar{D}_{10}^2}}{\bar{D}_{10}}$$

$$En\ volume \quad \alpha_v = \frac{\sigma_v}{\bar{D}_{50}} = \frac{\sqrt{\bar{D}_{20}^2 - \left(2\bar{D}_{10} - \bar{D}_{50}\right)\bar{D}_{50}}}{\bar{D}_{50}}$$

Selon l'invention, un aérosol est considéré monodispersé si les particules le constituant vérifient l'inégalité :

$$\alpha \leq 0,2$$

La mesure par Laser fournit un Span :

$$Span = \frac{(D_{90} - D_{10})}{D_{50}} \approx \frac{2.5\sigma_v}{D_{50}}$$

$$Span \approx 2.5\alpha_v$$

L'expression « particules monodisperses » désigne selon l'invention des particules dont la taille moyenne présente un coefficient de déviation standard d'une distribution gaussienne $0,05 \leq \alpha \leq 0,1$ équivalant à un Span : $0,25 \leq Span \leq 1$.

L'expression « particules à polydispersité contrôlée » désigne selon l'invention des particules dont la taille moyenne présente un coefficient de déviation standard d'une distribution gaussienne $0,1 \leq \alpha \leq 0,4$, équivalant à un Span : $0,25 \leq Span \leq 1$.

Comme décrit dans le tableau ci-dessous, les appareils connus, qu'ils fonctionnent par séchage de gouttelettes entraînées dans un gaz vecteur ou refroidissement de gouttelettes par un gaz vecteur, s'ils sont équipés de dispositifs classiques de pulvérisation à buses, turbines disques ou têtes perforées, ne permettent pas d'obtenir des particules monodisperses et rarement des particules à polydispersité contrôlée avec un span inferieur à 1.

Au contraire, l'invention permet la fabrication de toutes ces particules solides, ou en cours de solidification, avec ou sans micro-encapsulation, et dont le span est compris entre 0,12 et 1.

Tableau : Domaine couvert par l'invention suivant d'une part la taille moyenne des particules, la dispersion de celles-ci, et d'autre part la méthode d'obtention des particules solides par séchage ou par solidification de gouttelettes.

| *Séchage de gouttelettes par entrainement (atomisation ou Spray drying)* ***SD*** | Mono Disperse Contrôlé | Poly disperse Contrôlé Domaine 1/ | Poly disperse Contrôlé Domaine 2/ | Poly disperse Contrôlé Domaine 3/ | Poly disperse Non contrôlée Domaine 1/ | Poly disperse Non contrôlée Domaine 2/ | *Solidification de gouttelettes de liquide Par refroidissement (Spray cooling ou Prilling)* ***SC*** |
|---|---|---|---|---|---|---|---|
| *Dispersion av* | *0,05 →0,1* | *0,1 →0,2* | *0,2 →0,3* | *0,3 →0,4* | *0,4 →0,7* | *0,7→1,2* | |
| SPAN mini→ Maxi | 0, 12→0,25 | 0, 25→0, 5 | 0,5→0,75 | 0, 75 →1 | 1 →1,8 | 1,8 → 3 | |

(suite)

| Séchage de gouttelettes par entrainement (atomisation ou Spray drying) *SD* | Mono Disperse Contrôlé | Poly disperse Contrôlé Domaine 1/ | Poly disperse Contrôlé Domaine 2/ | Poly disperse Contrôlé Domaine 3/ | Poly disperse Non contrôlée Domaine 1/ | Poly disperse Non contrôlée Domaine 2/ | Solidification de gouttelettes de liquide Par refroidissement (Spray cooling ou Prilling) *SC* |
|---|---|---|---|---|---|---|---|
| Granulométrie Moyenne D(v, o.5) en µm | | | | | | | Granulométrie Moyenne D(v,o.5) en µm |
| 20µm | DI (SD) | DI (SD) | DI (SD) | DI (SD) | *T(SD)* | *B(SC)* | 20µm |
| | DI (SC) | DI (SC) | DI (SC) | DI (SC) | *B(SD)* | *T(SC)* *T(SD)* | |
| 50µm | DI (SD) DI (SC) | DI (SD) DI (SC) | DI (SD) DI (SC) | DI (SD) DI (SC) | *T(SC)* *T(SD)* *B(SD)* | *B(SC)* | 50µm |
| 100µm | DI (SD) DI (SC) | DI (SD) DI (SC) | DI (SD) DI (SC) | DI (SD) DI (SC) | *T(SC)* *B(SD)* *T(SD)* | *B(SC)* | 100µm |
| 200µm | DI (SD) DI (SC) | DI (SD) DI (SC) | DI (SD) DI (SC) | *T(SC)* DI (SD) DI(SC) | *TP(SC)* *B(SD)* *T(SD)* | *TP(SC)* | 200µm |
| 500µm | DI (SD) DI (SC) | DI (SD) DI (SC) | DI (SD) DI (SC) | *TP(SC)* *T(SC)* | *B(SD)* *T(SD)* | | 500µm |
| 750µm | DI (SC) | DI (SC) | *TP(SC)* | *T(SC)* | | | 750µm |
| | DI (SC) | DI (SC) | *TP(SC)* | *T(SC)* | | | 1000µm |
| | DI (SC) | DI (SC) | *TP(SC)* DI(SC) | | | | 2000µm |

Légende : ➢ Méthodes standard Buses B, Turbine T ou Têtes perforées vibrées ou non (shower head) TP
➢ Domaine spécifique de l'invention :DI*(Disque contrôlé, vibré ou non). Nota : les autres domaines couverts par les autres technologies sont accessibles par l'invention, mais non indiqués dans ce tableau
➢ *SD (séchage de gouttelettes, spray drying)* et SC *(solidification de gouttelettes, procédés dits spray-cooling ou prilling)*

L'appareil objet de l'invention fournit des aérosols avec une dispersion monodisperse ou à polydispersité contrôlée.

En ce qui concerne l'application dans l'encapsulation par solidification de gouttelettes de liquide par refroidissement par un gaz vecteur, la variation des paramètres concernera :

- Choix de la matrice filmogène : produit pur ou mélange
- Point de fusion de la matrice et de son mélange avec l'actif
- Viscosité de l'actif en fonction de la concentration et de la température
- Point de ramollissement en fonction de la concentration et de la température
- Diamètre du disque vibro-rotatif
- Fréquence de vibration
- Nature du matériau de construction du disque vibrant

On détermine la quantité de liquide ou de poudre que l'on injecte, en fonction d'au moins une caractéristique de la composition à obtenir. Cette caractéristique comporte typiquement la thermo-résistance (enzymes, vitamines, molécules bioactives thermosensibles d'extraits de plantes), la revivifiabilité (micro-organismes vivants, bactéries, levures, moisissures), la rétention des molécules volatiles (huiles essentielles, arômes, parfums), l'oxydation (matières grasses, huiles, cires, oléorésines), le pouvoir antibiotique (huiles essentielles, antibiotiques), la prévention de la formation de mauvais goûts par destruction ou modification de la composition sous l'effet de la température (prévention de la formation de goût de cuit, réactions de Maillard), etc.

L'invention a encore pour objet, selon un autre de ses aspects, un appareil nouveau issu de l'association d'un système de production d'aérosols monodisperses ou à polydispersité contrôlée en lieu et place des systèmes de pulvérisation à buses ou à turbines équipant traditionnellement les tours d'atomisation, les tours de spray-cooling ou prilling ou tout autre équipement nécessaire à la pulvérisation d'une composition liquide dans un gaz. Cet appareil est destiné à la préparation de compositions destinées à des applications agro-alimentaires, nutritionnelles, cosmétiques, pharmaceutiques et de la chimie fine, comprenant une substance active de nature biochimique, chimique ou minérale, solubilisée dans une phase aqueuse ou organique, ou des mélanges de ces substances, dont la pulvérisation dans un courant de gaz, pouvant être par exemple de l'air, permet d'obtenir des particules solides micro-encapsulées, à caractère monodisperse ou à polydispersité contrôlée, avec un span inférieur à 1.

Selon d'autres aspects de l'invention, il existe de nombreuses configurations possibles permettant d'associer le système de production d'aérosols monodisperses ou à polydispersité contrôlée à une tour d'atomisation ou de prilling.

Parmi les avantages majeurs de l'invention, les nouveaux appareils objet de l'invention présentent des performances en matière de productivité (rendement matière sèche entrante sur matière sortante) supérieures à 95%, par rapport aux matériels standards connus de l'homme de l'art dont les rendements se situent entre 85% et 95%. Ce constat surprenant a été réalisé en mesurant le taux de fines particules (donc de pertes matières) dans le gaz vecteur. Il a été trouvé un taux très inférieur à 200 mg/Nm$^3$ de gaz, alors que des unités standard de type tours de séchage par atomisation, ou tours de spray-cooling ou tours prilling équipées normalement de cyclones conduisent en sortie de cyclones à des valeurs comprises entre 200 et 400 mg/Nm$^3$ de gaz.

Un autre avantage de l'invention est l'homogénéisation des modes de transferts thermiques attachés à la monodispersion des gouttes dans un flux gazeux laminaire lors des changements d'état tels qu'évaporation ou solidification avec des économies d'énergie possibles. La taille extrêmement homogène des gouttelettes permet de doser avec précision l'apport thermique à la valeur juste suffisante. On minimise ainsi le stress thermique des particules tout en économisant l'énergie et en étant certain que toutes les gouttelettes sont complètement traitées.

Compte-tenu de la très grande homogénéité dimensionnelle des particules produites, l'invention permet souvent de se dispenser de systèmes complexes tels que cyclones primaire et secondaire en série, filtres à manches, laveurs d'air, etc., normalement indispensables pour séparer les fines particules en sortie.

Dans tous les cas, même s'il s'avère nécessaire d'installer de tels systèmes pour des raisons de sécurité, l'invention permet de réduire très significativement leur taille. Et on minimise de toute façon les pertes de matière constituées par les fines particules.

D'autres particularités et avantages de l'invention ressortiront encore de la description ci-après, relative à des exemples non limitatifs.

Aux dessins annexés :

-- la figure 1 est une vue schématique en perspective et coupe axiale représentant un mode de réalisation d'une tête de pulvérisation selon l'invention ;
-- la figure 2 et une demi-coupe axiale schématique de la tête de pulvérisation de la figure 1 ;
-- la figure 3 et une coupe de l'arbre creux suivant III-III de la figure 2 ;
-- la figure 4 et une coupe partielle du disque rotatif, illustrant son mode de déformation vibratoire ;
-- les figures 5 à 8 sont des vues analogues à la figure 1, mais représentent respectivement quatre autres modes de réalisation de la tête de pulvérisation selon l'invention ;
-- la figure 9 est un graphique représentant une distribution monodisperse (en trait continu), et une distribution polydisperse contrôlée (en trait discontinu) ;
-- la figure 10 est un graphique représentant une distribution pluridisperse ;
-- la figure 11 est une vue schématique en coupe axiale, d'un appareil selon l'invention pour la fabrication d'un produit pulvérulent ;
-- la figure 12 est une vue schématique de dessus montrant un appareil selon l'invention à plusieurs têtes ;
-- la figure 13 est un schéma conceptuel d'un appareil selon invention ;
-- les figures 14 à 16 sont des schémas représentant trois modes de réalisation de l'appareil ; et
-- les figures 17 à 20 sont des photographies de particules obtenues grâce à l'invention, prises au microscope électronique.

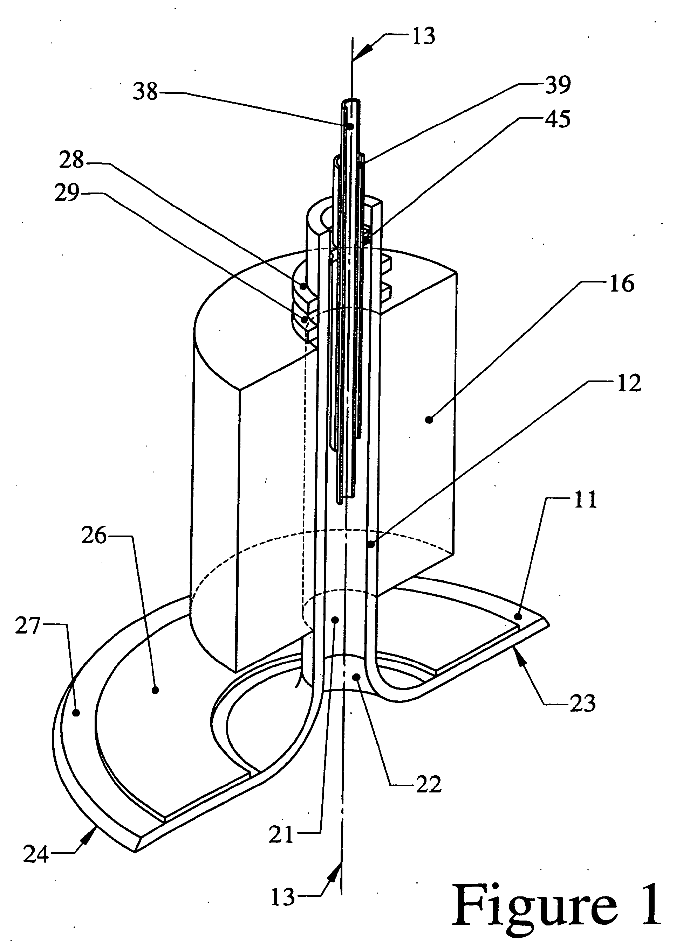

Dans l'exemple représenté aux figures 1 à 4, la tête de pulvérisation comprend un disque vibro-rotatif 11 rigidement solidaire d'un arbre tubulaire 12 à une extrémité de celui-ci. Le disque 11 et l'arbre 12 ont un axe commun 13 qui constitue leur axe géométrique en même temps que leur axe de rotation.

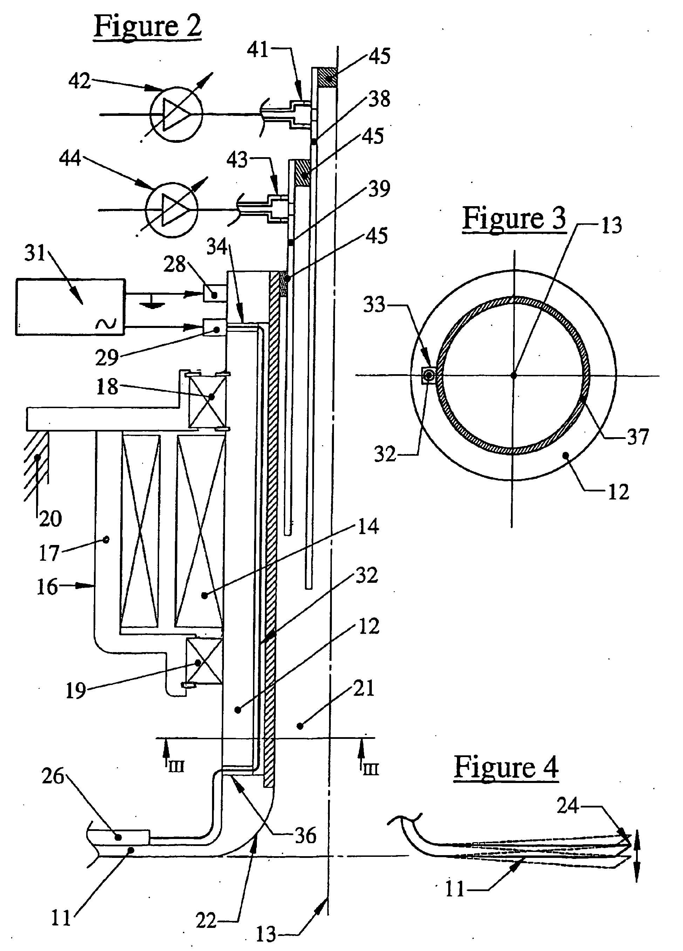

L'arbre 12 est solidaire en rotation du rotor 14 (figure 2) d'un moteur électrique 16 à vitesse réglable destiné à l'entraînement rotatif de l'arbre 12 et du disque 11. À la figure 1, le moteur 16 n'est représenté que très schématiquement par un seul bloc. La figure 2 illustre qu'un carter 17 du moteur 16 est solidaire d'un bâti ou autre support fixe 20. En outre, l'arbre tubulaire 12 est supporté en rotation dans le carter 17 grâce à des paliers 18,19. L'un des paliers, 18, immobilise axialement l'arbre tubulaire 12 relativement au carter 17 et donc relativement au bâti 20.

L'espace intérieur 21 de l'arbre tubulaire 12 constitue un trajet d'acheminement de la substance à pulvériser. Il débouche par un orifice 22 à travers la face 23 du disque 11 qui est tournée à l'opposé du moteur 16. L'orifice 22 est évasé à la manière d'une trompette pour former une courbure de transition entre la paroi intérieure cylindrique de l'arbre 12 et la face plane 23.

La face 23 du disque constitue, de manière connue en soi, une face d'éjection centrifuge pour la substance à pulvériser. Par effet centrifuge dû à la rotation du disque 11, la substance à pulvériser arrivant par l'orifice 22 forme une nappe sur la face d'éjection 23. La substance est ensuite projetée par effet centrifuge radialement au-delà d'un bord d'éjection périphérique 24 de la face d'éjection 23. Le bord 24 est circulaire centré sur l'axe 13. Radialement au-delà du bord 24, la nappe se fractionne typiquement en filets liquides puis en gouttelettes. Le bord 24 peut être lisse, comme représenté, ou être régulièrement denté pour favoriser la formation d'un filet liquide à l'extrémité de chaque dent. La face d'éjection 11 peut être lisse ou striée.

De manière connue en soi, une vibration entretenue dans le disque 11 a pour effet que les gouttelettes sont toutes sensiblement de même taille. Suivant la présente invention, la vibration consiste à faire vibrer la région du bord d'éjection 24 par rapport à la partie centrale du disque 11 et par rapport à l'arbre 12. Un tel mode de déformation vibratoire est illustré à la figure 4. Par une flexion de la matière, typiquement métallique, du disque 11, le bord 24 effectue un mouvement de va-et-vient suivant une direction générale parallèle à l'axe 13.

Un tel mode de déformation vibratoire présente typiquement une fréquence propre très élevée, pouvant atteindre 100 kHz ou même davantage. Pour des raisons d'efficacité et de coûts énergétiques, il est techniquement avantageux d'entretenir la vibration du disque au voisinage de sa fréquence propre. Par ailleurs, la fréquence de vibration est un paramètre permettant de régler le calibre des gouttes produites. Par conséquent, la tête selon l'invention ayant une fréquence propre très élevée permet de produire des gouttes particulièrement petites, pouvant par exemple avoir un diamètre de 20 micromètres.

La fréquence propre d'une vibration dépend notamment de la raideur élastique de l'organe subissant la déformation vibratoire, et de la masse déplacée par la vibration. Il est donc possible de choisir la fréquence propre du disque lors de sa fabrication, et de réaliser des disques différents ayant des fréquences propres différentes.

Pour entretenir la vibration du disque 11 en fonctionnement, on a fixé des cellules piézo-électriques 26 sur la face 27 du disque 11 qui est tournée vers le moteur 16, donc la face opposée à la face d'éjection 23. Comme schématiquement représenté à la figure 1, les cellules 26 constituant des moyens d'excitation vibratoire sont régulièrement réparties autour de l'axe 13.

Comme le montre la figure 2, l'arbre 12 porte sur sa face extérieure, de l'autre côté du moteur 16 par rapport au disque 11, deux contacts tournants 28, 29 qui sont raccordés à un onduleur à fréquence variable 31. Le contact 28 est un contact de masse électrique, raccordé électriquement à l'arbre 12 et au disque 11. Le contact 29, recevant le signal alternatif de l'onduleur 31, est raccordé à un conducteur isolé 32 (voir aussi figure 3) qui va du contact 29 aux cellules piézo-électriques 26 en passant par une gorge axiale 33 formée dans la face intérieure de l'arbre 12. La gorge 33 débouche à travers la face extérieure de l'arbre 12 par des passages 34 et 36 permettant au conducteur 32 d'être raccordé au contact tournant 29 d'une part et aux cellules 26 d'autre part. La face intérieure de l'arbre tubulaire 12 est gainée par un manchon 37 en matière synthétique qui recouvre complètement la gorge 33 et les passages 34, 36, de sorte que le conducteur 32 est intercalé entre l'arbre 12 et le manchon 37.

La tête de pulvérisation comprend en outre des moyens d'acheminement de la substance à pulvériser. Les moyens d'acheminent comprennent l'espace intérieur 21 de l'arbre 12. Dans l'exemple représenté où la face d'éjection 23 est tournée vers le bas tandis que la substance à pulvériser se déplace vers le bas dans l'espace intérieur 21 de l'arbre 12, le diamètre intérieur de l'arbre 12 est choisi suffisamment faible pour que la substance, en fonction de sa viscosité, ne tombe pas axialement du dispositif par gravité, mais reste au contraire en contact capillaire avec les surfaces intérieures de l'arbre 12, en particulier du manchon 37, et de l'orifice 22, et avec la face d'éjection 23.

Si la substance à pulvériser est formée d'un seul composant, ou de plusieurs composants mélangés préalablement, on peut raccorder l'extrémité de l'arbre 12 opposée au disque 23 avec le tube de refoulement d'une pompe doseuse par l'intermédiaire d'un raccord tournant. La pompe envoie la substance dans l'espace intérieur 21 de l'arbre 12, avec un débit que l'on peut régler.

Dans l'exemple plus perfectionné qui est représenté aux figures 1 et 2, l'espace intérieur 21 du tube 12 sert d'espace de mélange en vue de pulvériser une substance formée de deux composants. Deux tubes concentriques 38, 39 pénètrent co-axialement dans l'espace intérieur 21 de l'arbre 12 par son extrémité opposée au disque 11. L'intérieur du tube intérieur 38 est raccordé par un joint tournant 41 avec une pompe doseuse 42 alimentant l'un des composants. L'espace annulaire situé entre les tubes 38 et 39 est raccordé par un joint tournant 43 avec une pompe doseuse 44 alimentant l'autre composant. Des bouchons 45 empêchent les composants ou leur mélange de s'échapper de la tête par le côté opposé à l'orifice 22. Les tubes 38 et 39 sont rotatifs avec l'arbre tubulaire 12 du moteur 16. Les deux composants peuvent par exemple être, respectivement, un principe actif et un composé d'encapsulation.

Les deux tubes 38, 39 débouchent dans l'espace intérieur 21 de l'arbre creux 12 à une certaine distance en-deçà de l'orifice 22, de sorte que, le long de cette distance, l'espace intérieur 21 constitue une zone de mélange des deux composants. L'action de mélange est renforcée par la rotation de l'arbre 12 et des deux tubes. De préférence, la position axiale des deux tubes est réglable par coulissement télescopique dans l'arbre. Ceci permet de régler la longueur de la zone de mélange.

L'un des deux composants peut être une poudre. Dans une première version typique, la, poudre a une granulométrie beaucoup plus fine que les gouttelettes à réaliser par pulvérisation. L'autre composant est alors typiquement une matrice qui va réunir dans chaque gouttelette un grand nombre de particules de poudre. Dans une autre version typique, la granulométrie de la poudre est voisine de la granulométrie de l'aérosol à réaliser. Par exemple, la poudre est constituée par des billes sphériques monodisperses ou à polydispersité maîtrisée, préalablement fabriquées au moyen d'une première mise en oeuvre de l'invention ayant comporté une pulvérisation suivie d'une solidification par séchage ou figeage. Dans ce cas d'une poudre plus grosse, le mélange arrivant sur la surface d'éjection forme une nappe de composant liquide dans laquelle les particules de poudre roulent avant d'être éjectées pour former les gouttelettes d'aérosols comprenant chacune un grain de poudre enrobé du composant liquide. Le composant liquide est par exemple destiné à former un film d'encapsulation du grain de poudre.

En fonctionnement, on règle ou on choisit les paramètres, notamment le débit de la substance, ou les débits respectifs des composants, leur température respective, le diamètre et la raideur élastique du disque, la fréquence vibratoire, l'état de surface du disque, etc. en fonction de la nature des composants, de la taille des gouttelettes à réaliser, et des quantités à produire par unité de temps.

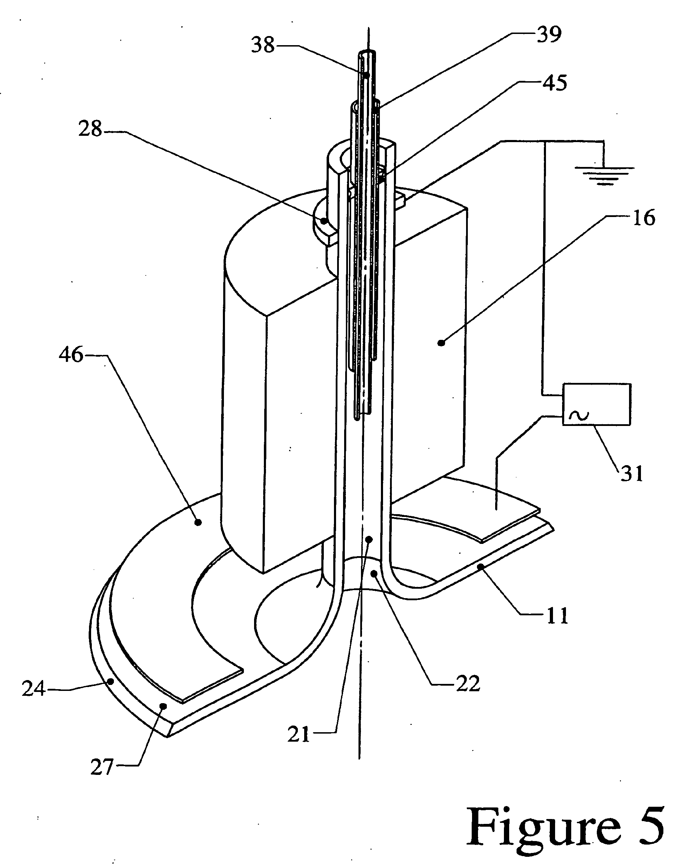

Les exemples représentés aux figures 5 à 7 ne seront décrits que pour leurs différences par rapport à celui des figures 1 à 4.

Dans l'exemple représenté à la figure 5, les moyens d'excitation sont capacitifs. Le disque 11 forme un condensateur avec une armature 46 fixe placée en regard de la face 27 du disque 11. Il n'y a plus qu'un seul contact tournant, le contact tournant 28 qui relie le disque 11 à la masse. L'armature fixe 46 est raccordée à la sortie de signal de l'onduleur 31.

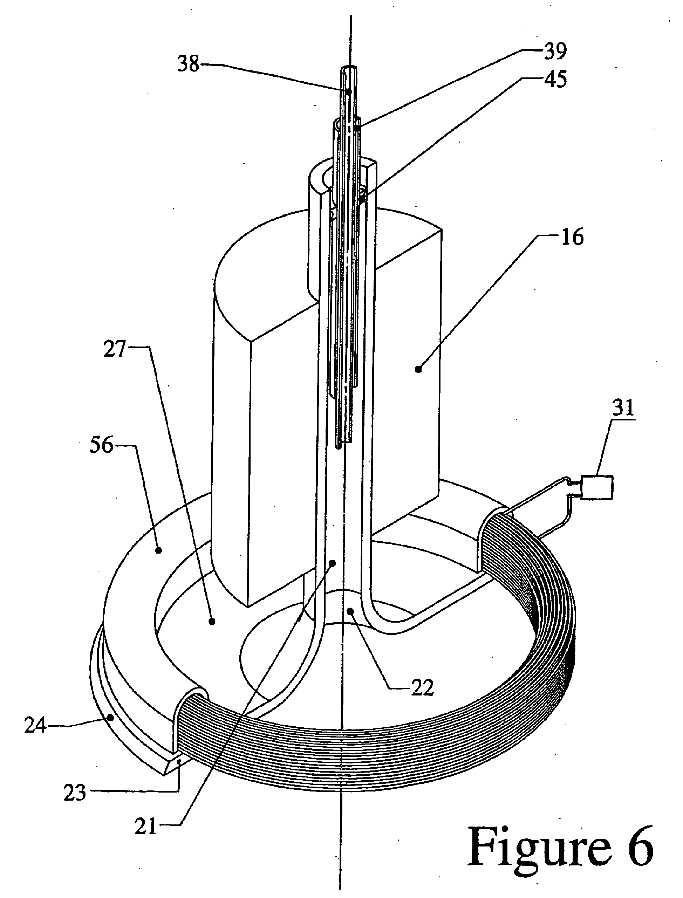

Dans l'exemple représenté à la figure 6, les moyens d'excitation sont inductifs. Le disque 11 forme une armature électromagnétique pour un solénoïde 56 fixe placé autour de l'axe 13 en regard de la face 27 du disque 11. Il n'y a plus de contact tournant. Les deux extrémités du solénoïde sont raccordées aux deux bornes de l'onduleur 31.

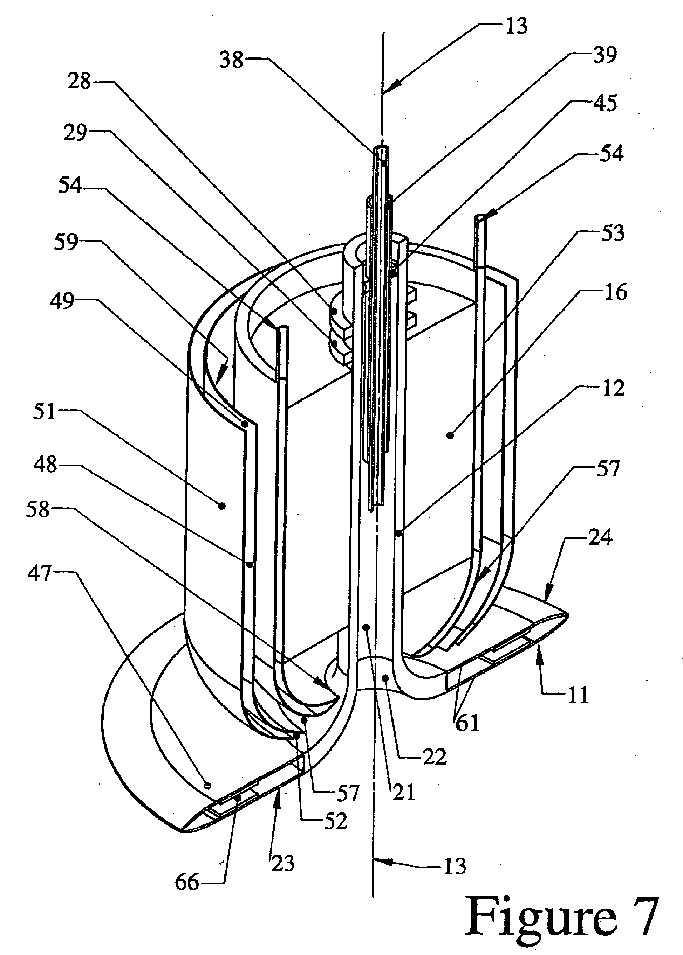

Le disque vibro-rotatif de la tête de pulvérisation représentée à la figure 7 comporte une seconde face d'éjection 47 tournée vers le moteur 16. La seconde surface 47 est alimentée en substance à pulvériser par un conduit annulaire 48, non rotatif, qui entoure le moteur 16. Le conduit annulaire 48 est formé entre deux parois cylindriques 49, 51, coaxiales. Dans la région située axialement entre le moteur 16 et la face d'éjection 47, les deux parois 49, 51 convergent en direction de l'axe 13 pour former un orifice annulaire 50 délivrant la substance à pulvériser sur la zone de raccordement entre la face extérieure de l'arbre 12 et la face d'éjection 47. De manière non représentée, une pompe doseuse envoie dans le conduit annulaire 48 la substance à pulvériser par centrifugation sur la face 47.

Les substances à pulvériser sont fréquemment chauffées pour réduire leur viscosité. En outre, les deux parois 49, 51 forment une barrière thermique qui tend à s'opposer à l'évacuation de la chaleur produite par le moteur 16. Pour ces deux raisons, la présence du conduit annulaire 48 autour du moteur 16 peut nuire au refroidissement du moteur 16. Pour y remédier, le moteur 16 est monté dans une chemise creuse 53 dans laquelle circule un liquide de refroidissement. Le liquide arrive dans la chemise 53 et quitte la chemise 53 par des raccords 54. À son extrémité dirigée vers le disque 11, la chemise 53 forme une coupole 57 qui enveloppe l'extrémité correspondante du moteur 16. La coupole 57 comporte un orifice central 58 traversé par l'arbre tubulaire 12 avec un certain jeu. La chemise 53 peut par exemple être installée autour du carter 17 représenté à la figure 2, ou être constituée par le carter 17 lui-même, qui serait alors muni de passages internes pour le liquide de refroidissement. Un intervalle d'air 59 est ménagé entre le conduit annulaire 48 et la chemise creuse 53, située radialement à l'intérieur conduit 48.

Suivant une autre particularité du mode de réalisation de la figure 7, le disque vibro-rotatif 11 et creux. Il est composé de deux plaques 61 qui portent chacune l'une des surfaces d'éjection 23 ou respectivement 47 sur sa face extérieure. Sur sa face intérieure, chaque plaque 61 porte des cellules piézo-électriques 66. Les plaques 61 s'étendent parallèlement entre elles et perpendiculairement à l'axe général 13 sur une certaine distance à partir de l'orifice 22, puis convergent symétriquement l'une vers l'autre pour se rejoindre au bord d'éjection 24, qui est donc commun aux deux faces d'éjection.

En fonctionnement, les substances qui sont acheminées respectivement sur l'une ou l'autre des deux faces d'éjection 23, 47 se mélangent lorsqu'elles franchissent le bord d'éjection 24.

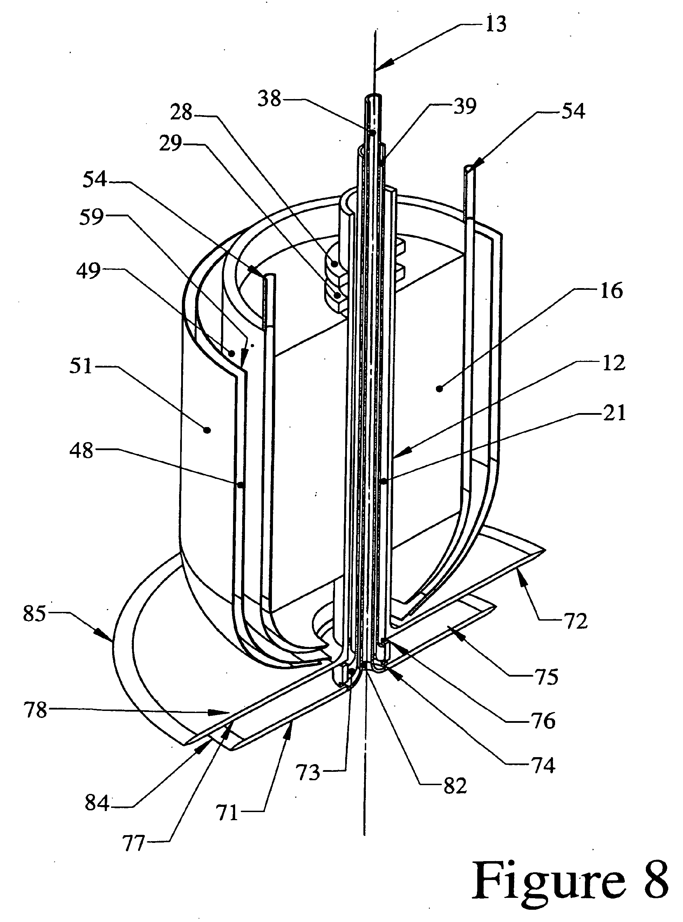

Le mode de réalisation de la figure 8 ne sera décrit que pour ses différences par rapport à celui de la figure 7.

Il y a maintenant deux disques vibro-rotatifs 71, 72 ayant comme axe commun l'axe général 13, et qui sont tous deux solidaires de l'arbre creux 12. Les disques sont représentés pleins mais ils pourraient être réalisés creux comme à la figure 7 pour contenir chacun des cellules piézoélectriques. Chaque disque porte deux faces d'éjection. Au lieu de déboucher dans l'espace intérieur 21 le conduit 38 se raccorde de manière continue avec le disque distal 71 le plus éloigné du moteur 16 et débouche à travers le disque 71 par un orifice 82 et achemine ainsi de la substance sur la face d'éjection du disque 71 qui est tournée à l'opposé du moteur 16. Le conduit 39 qui entoure le conduit 38 se prolonge lui aussi jusque dans la région des disques 71, 72, où il forme une collerette 73 formant entretoise entre les deux disques. Cette collerette solidarise le disque distal 71 avec le disque proximal 72 lui-même solidaire de l'arbre creux 12. En outre, la collerette est évidée pour définir des orifices 74, 76 répartis angulairement autour de l'axe 13. L'espace annulaire compris entre les conduits 38 et 39 débouche par les orifices 74 sur la face d'éjection 75 du disque distal 71 qui est tournée vers l'autre disque 72 et vers le moteur 16. L'espace annulaire compris entre le conduit 39 et la face intérieure de l'arbre 12 débouche par les orifices 76 sur la face d'éjection 77 du disque proximal 72 qui est tournée vers l'autre disque 71 et à l'opposé du moteur 16. De manière non représentée, une troisième pompe doseuse et un troisième joint tournant acheminent de la substance à pulvériser dans l'espace annulaire compris entre le conduit 39 la face intérieure de l'arbre 12. Enfin, le conduit annulaire 48 alimente la face d'éjection 78 du disque proximal 72 qui est tournée vers le moteur 16.

En fonctionnement, les deux substances alimentant les deux faces d'éjection de chaque disque se mélangent lorsqu'elles arrivent au bord d'éjection commun 84 ou 85 de ce disque. L'aérosol obtenu comporte typiquement un mélange de gouttelettes issues du disque proximal et de gouttelettes issues du disque distal. Ce mode de réalisation est utile pour produire une grande quantité de gouttelettes d'une même nature si les disques sont alimentés avec des substances identiques, ou de deux natures différentes dans le cas contraire. On peut régler ou choisir les paramètres de réalisation et/ou fonctionnels relatifs à chaque disque et aux substances qui lui sont associées pour que le mélange de substances soit dans un rapport déterminé dans l'aérosol.

Même si les disques sont alimentés avec les mêmes substances, on peut faire en sorte que les disques produisent des gouttelettes de tailles respectivement différentes en choisissant des paramètres différents pour les deux disques. La figure 8 illustre cela en représentant les deux disques avec des diamètres différents.

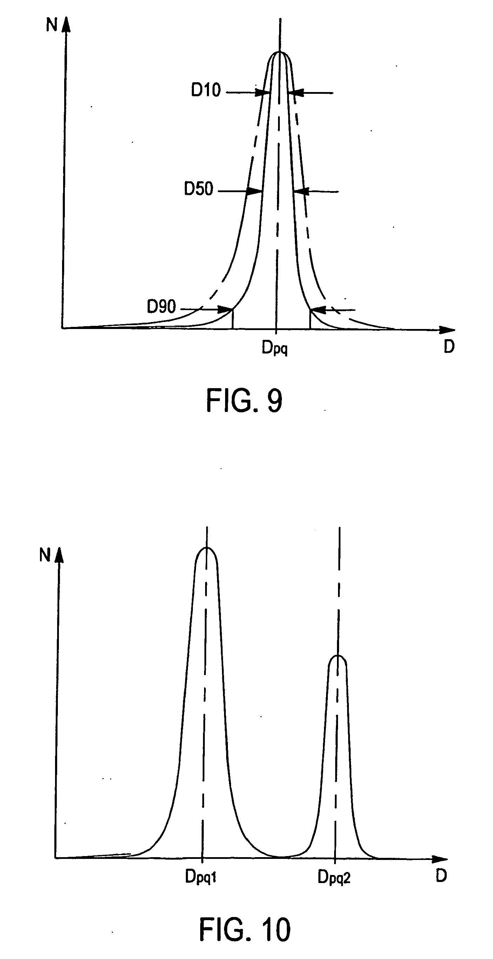

La figure 9 est un graphique statistique représentant, pour un échantillon d'aérosol, le nombre N de particules d'aérosol en fonction du diamètre D des particules. Deux distributions gaussiennes sont représentées.

La distribution en trait plein est dite « monodisperse ». La quasi-totalité des particules a un diamètre très proche de la valeur centrale $D_{pq}$ qui est en même temps celle pour laquelle on trouve le plus grand nombre de particules.

La distribution en trait mixte est dite « polydisperse maîtrisée ». Elle ressemble à la précédente, mais les valeurs de diamètre sont moins bien rassemblées près de la valeur centrale $D_{pq}$.

L'homme de métier définit un paramètre appelé « span » qui caractérise une distribution telle que celles représentées à la figure 9, ou plus généralement une distribution gaussienne. On a la relation :

$$Span = (D_{90} - D_{10}) / D_{50}$$

Dans laquelle :

$D_{90}$ est l'intervalle de valeurs (diamètres) dans lequel on trouve les 90% en volume des particules les plus proches de la valeur centrale,
$D_{10}$ est l'intervalle de valeurs (diamètres) dans lequel on trouve les 10% en volume des particules les plus proches de la valeur centrale, et
$D_{50}$ est l'intervalle de valeurs (diamètres) dans lequel on trouve les 50% en volume des particules les plus proches de la valeur centrale.

À la figure 9, ces paramètres sont illustrés dans le cas de la distribution monodisperse. Le calcul montre que le span est sensiblement égal à 2,5 fois la déviation standard en volume :

$$Span \approx 2,5 \, \alpha_v$$

Il existe également la relation suivante entre le span et l'écart-type en volume $\sigma_v$ :

$$Span \approx (2,5 \, \sigma_v) / D_{50}$$

Plus la granulométrie est uniforme, plus la valeur du span est faible.

Dans le cadre de l'invention, on considère que la granulométrie est monodisperse lorsque le span est compris entre 0,12 et 0,25. On considère que la granulométrie est polydisperse maîtrisée lorsque le span est compris entre 0,25 et 1,0. Ces valeurs sont très exigeantes car les performances offertes par le procédé de pulvérisation selon l'invention sont très supérieures à celles permises par les procédés connus. Les meilleurs procédés connus revendiquent l'obtention de granulométries monodisperses pour des spans qui ne sont généralement pas inférieurs à 1,0.

La figure 10 illustre une distribution pluridisperse. Il y a deux (ou plus) valeurs centrales $D_{pq1}$ et $D_{pq2}$, et deux distributions monodisperses ou polydisperses maîtrisées associées chacune à l'une des valeurs centrales.

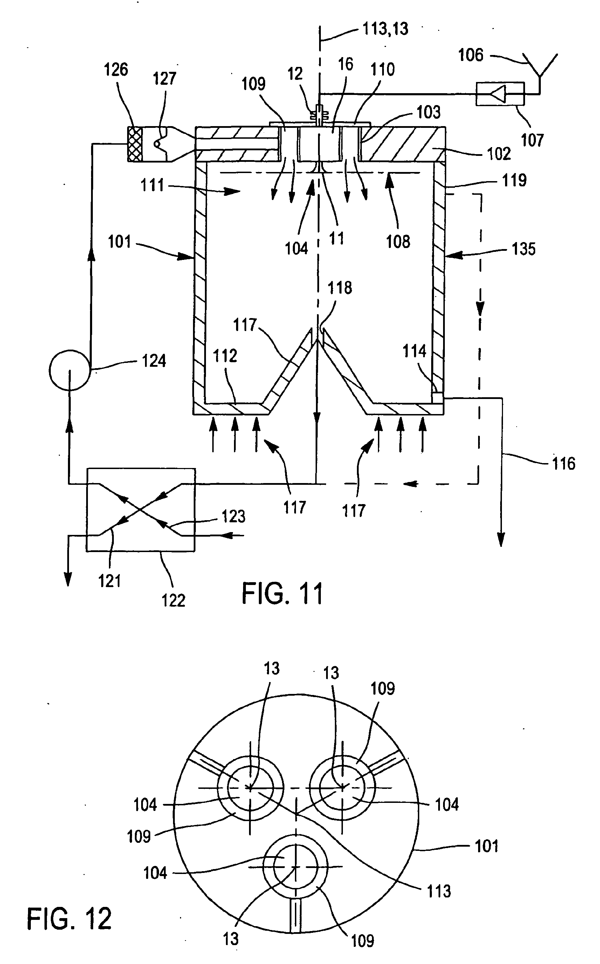

La figure 11 représente schématiquement un appareil de fabrication d'un produit pulvérulent. L'appareil comprend une tour 135 délimitée par une enceinte 101 ayant un axe vertical 113. Le sommet de l'enceinte 101 est fermé par une paroi 102. La paroi 102 comporte un logement axial 103 dans lequel est installée une tête de pulvérisation 104 qui peut être réalisée selon l'un des modes de réalisation des figures 1 à 8. L'axe général 13 de la tête 104 coïncide avec l'axe 113 de l'enceinte 101 et plus généralement de la tour 135.

L'alimentation de la tête 104 en substance à pulvériser est schématisée par une cuve 106 suivie d'une pompe doseuse 107. Le disque vibro-rotatif 11 de la tête 104 se trouve dans l'espace intérieur de l'enceinte. La surface d'éjection du disque 11 définit un plan 108 d'éjection centrifuge des gouttelettes. Ce plan s'étend perpendiculairement à l'axe 13, 113 à une certaine distance en dessous de la paroi supérieure 102.

La tête 104 est entourée par un distributeur d'air 109, de type connu, qui produit tout autour de la tête 104, vers l'intérieur de l'enceinte 101, un flux d'air 111, de forme générale tubulaire. Le flux de traitement 111 rencontre le plan d'éjection 108 dans la zone de formation des gouttelettes et entraîne ainsi les gouttelettes en dehors du plan 108, vers le bas.

Dans l'exemple, il s'agit d'un flux d'air chaud qui provoque un séchage des gouttelettes qui viennent ensuite s'accumuler sur le fond 112 de l'enceinte d'où elles sont récupérées à travers un orifice 114 et des moyens d'évacuation 116. Des flèches 117 illustrent que le fond de l'enceinte peut comporter des moyens pour une injection d'air secondaire réalisant un lit fluidisé pour les particules venant se rassembler sur le fond 112.

Dans l'exemple représenté, la tour est du type à fond en W. C'est-à-dire que le fond 112 présente suivant l'axe 113 un dôme conique 117 pointant vers l'intérieur de l'enceinte et dont le sommet est constitué par un orifice 118 d'évacuation de l'air usé, c'est-à-dire chargé d'humidité générée par le séchage des particules. Au moins une autre sortie d'air 119 peut également être prévue dans la région supérieure de la paroi latérale de l'enceinte. Grâce à l'invention, l'air usé ne contient pratiquement pas de fines particules. On peut donc se dispenser de le faire passer par un système de dépoussiérage ou de séparation. Au contraire, suivant une particularité de l'invention, cet air usé est directement envoyé dans un premier trajet 121 d'un échangeur de chaleur 122, de préférence sans même passer par un filtre. Le deuxième trajet 123 de l'échangeur 122 est traversé par de l'air nouveau destiné à alimenter le distributeur 109. À la sortie du deuxième trajet 123, l'air nouveau est propulsé par une soufflante 124, puis traverse un filtre 126 et ensuite un réchauffeur 127.

Dans l'échangeur 122, l'air usé cède sa chaleur à l'air nouveau 123. Ainsi, le réchauffeur 127 n'a plus qu'à fournir un complément thermique avec régulation de la température du flux d'air 111.

Comme le montre la figure 12, dans une enceinte 101 de plus grandes dimensions, on peut prévoir plusieurs têtes de pulvérisation 104 disposées symétriquement autour de l'axe 113. Chaque tête 104 est associée à son propre distributeur 109. Dans l'exemple il y a trois têtes 104 disposées en triangle, à intervalles angulaires égaux (120°) autour de l'axe 113. Bien entendu, dans ce cas, les axes 13 des têtes 104 ne coïncident plus avec l'axe général 113 de l'enceinte.

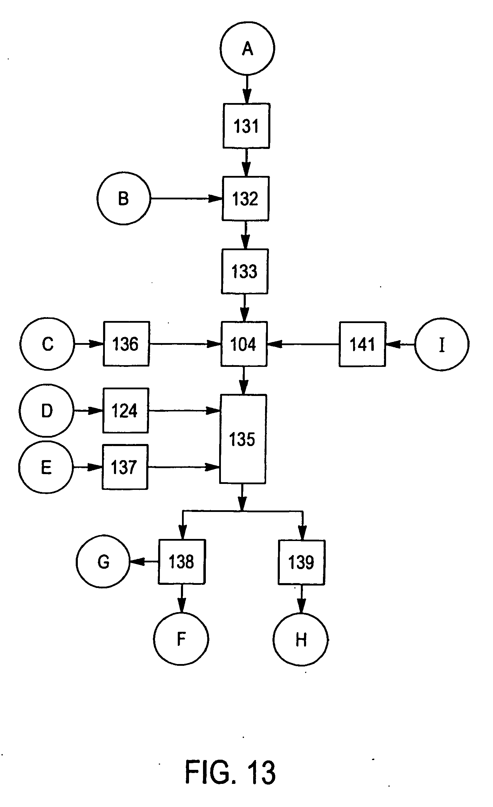

La Figure 13 est un schéma de principe général du procédé de l'invention. Une composition liquide initiale de micro-encapsulation, symbolisée par le cercle A, traverse un réchauffeur 131 avant d'atteindre un étage de dissolution ou dispersion 132 où est également introduite une substance active ou un mélange de substances actives à micro-encapsuler, symbolisée par le cercle B. À l'étage 132, le mélange de substances actives à micro-encapsuler est dissous ou dispersé de façon homogène dans la composition liquide initiale, afin d'obtenir une composition se présentant sous forme liquide contenant au moins une substance active ou un mélange de substances actives à micro-encapsuler. Une pompe 133 alimente ladite composition avec les actifs dans la tour d'atomisation ou de spray-cooling 135 via la tête de pulvérisation 104 destinée à la production d'aérosols monodisperses ou à polydispersité contrôlée. Le cercle C représente l'addition possible d'une substance ou d'un mélange de substances actives à micro-encapsuler via un doseur de poudre 136 directement au centre du disque, soit par un arbre creux tel que 12 des figures 1 à 8, soit par un cône d'injection ouvert, tel que le conduit annulaire 48 des figures 7 et 8, pour des disques à arbre plein ou dont l'arbre creux est utilisé pour injecter d'autres substances.

Le cercle D représente l'introduction du gaz vecteur, froid pour la solidification de l'aérosol en version spray-cooling ou chaud en version séchage par atomisation, via le ventilateur 124.

Le cercle E représente l'introduction du gaz vecteur secondaire, pour le séchage ou /et le refroidissement final de la composition finale stabilisée obtenue, solide ou en cours de solidification via un ventilateur 137.

Un cyclone 138 sépare tout ou partie du produit final F c'est-à-dire la composition pulvérulente, que l'on récupère, et le gaz vecteur G que l'on évacue.

Il peut également être prévu un lit fluidisé vibré externe 139 permettant la récupération de tout ou partie du produit final H, c'est-à-dire la composition pulvérulente, par le bas de la tour.

Il peut encore être prévu un doseur de poudre 141 pour ajouter en zone de pulvérisation une substance solide pulvérulente I destinée à stabiliser la composition solide finale. En référence à la figure 11, une telle injection de poudre peut se faire à travers la plaque 110 et le plafond du répartiteur 109, de manière répartie autour de l'axe 113. On peut également, de manière connue en soi, prévoir deux répartiteurs concentriques autour de la tête de pulvérisation 104, l'un pour un courant d'air principal comme représenté, l'autre pour un courant d'air auxiliaire servant de vecteur à la poudre et pouvant être à une température différente, plus convenable pour la poudre.

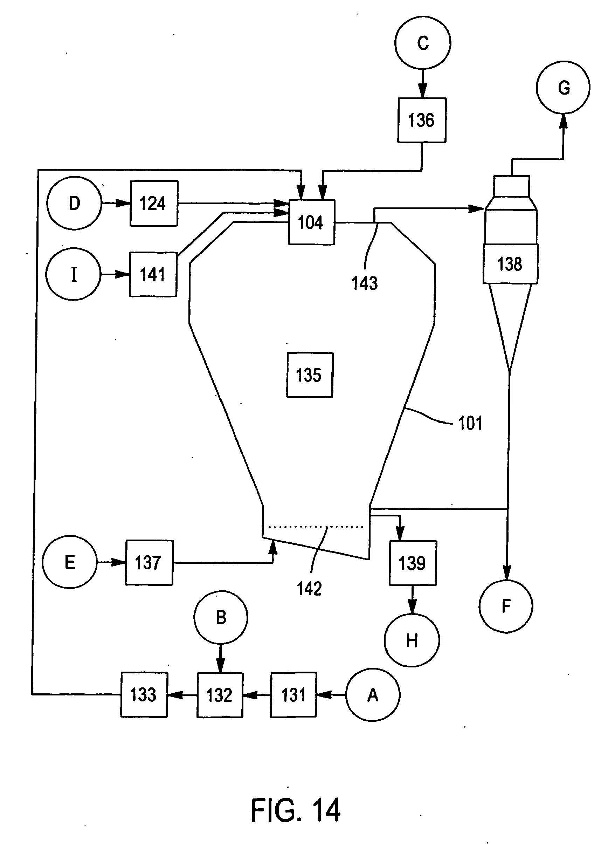

La Figure 14 est un schéma de principe du procédé de l'invention, mis en oeuvre dans une tour à multiples effets. Les cercles A, B, C, D, E, F, G, H et I, ainsi que les rectangles 104, 124, 131 à 133, 135 à 141 ont les significations indiquées à propos de la Figure 13. L'introduction de l'air secondaire E a lieu à travers un fond perméable 142 de la tour 135 pour mettre la matière pulvérulente sous forme de lit fluidisé. L'air usé est évacué par un orifice 143 prévu à travers la paroi supérieure de l'enceinte 101. Dans cet exemple, l'air usé passe ensuite par le cyclone 138 qui produit d'un côté des particules de produit F et de l'autre de l'air à évacuer G. La majeure partie des particules est recueillie juste au-dessus de la paroi perméable 142. La figure 14 illustre que les particules sont collectées soit directement en F, soit par l'intermédiaire du lit fluidisé externe 139 en H lorsqu'il en est prévu un.

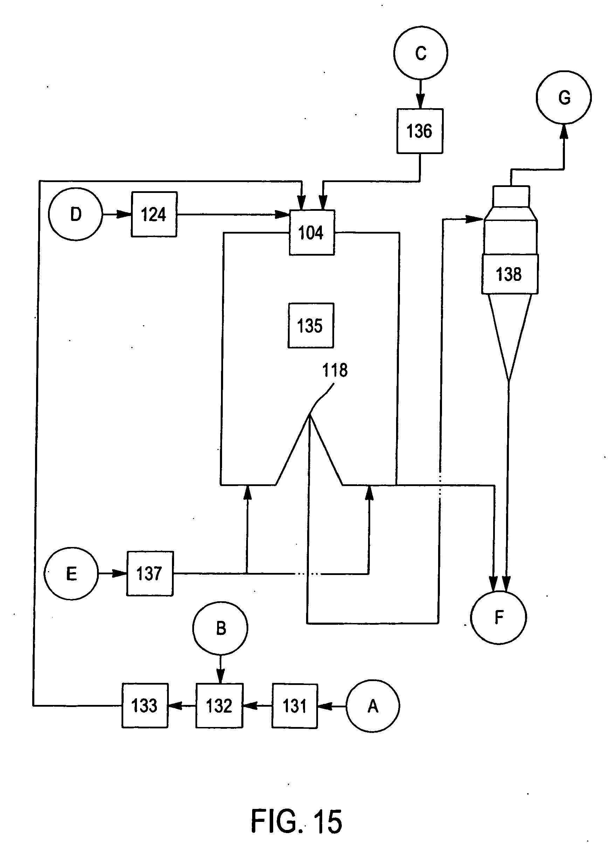

La Figure 15 est un schéma de principe du procédé de l'invention, mis en oeuvre dans une tour à fond dit « en W ». Les cercles A, B, C, D, E, F et G, ainsi que les rectangles 104, 124, 131 à 133 et 135 à 138 ont les significations indiquées en référence à la Figure 13. Ce mode de réalisation est plus simple que celui de la figure 15 car il ne comporte pas de lit fluidisé externe 139 ni de doseur de poudre 141. Il se distingue de celui de la figure 12 en ce que l'orifice 118 de sortie de l'air usé est relié au cyclone 138 qui produit, comme à la figure 14, d'une part de l'air à évacuer G, et d'autre part une partie du produit utile F. Toujours comme dans l'exemple de la figure 14, le reste du produit utile F provient directement du fond de la tour 135, aménagé en lit fluidisé.

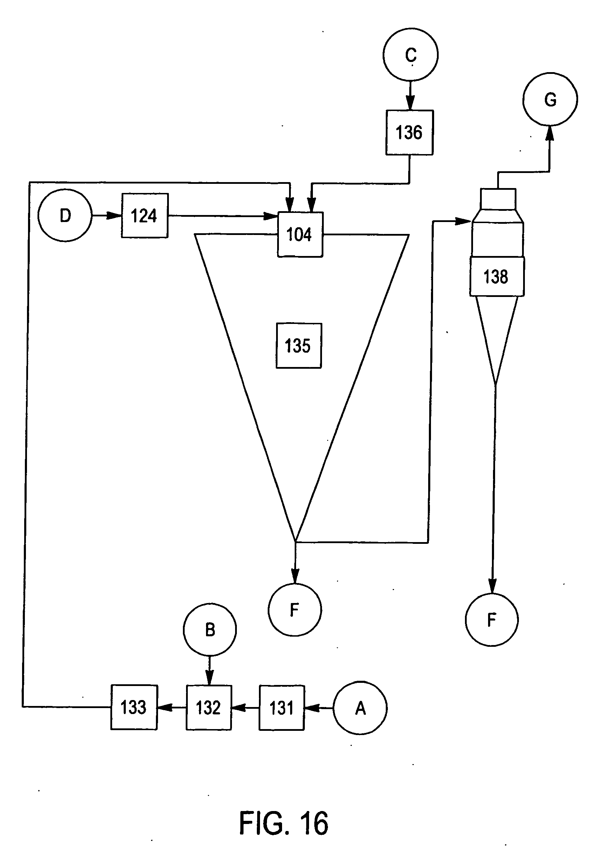

La Figure 16 est un schéma de principe du procédé de l'invention, mis en oeuvre dans une tour à simple effet. Les cercles A, B, C, D, F et G, ainsi que les rectangles 104, 124, 131 à 133, 135, 136 et 138 ont les significations indiquées en référence à la Figure 13. Il n'y a plus de lit fluidisé ni d'injection d'air secondaire à travers le fond de la tour 135. On extrait à travers ce fond pointu un mélange d'air usé et de particules. Ce mélange est séparé dans le cyclone 138.

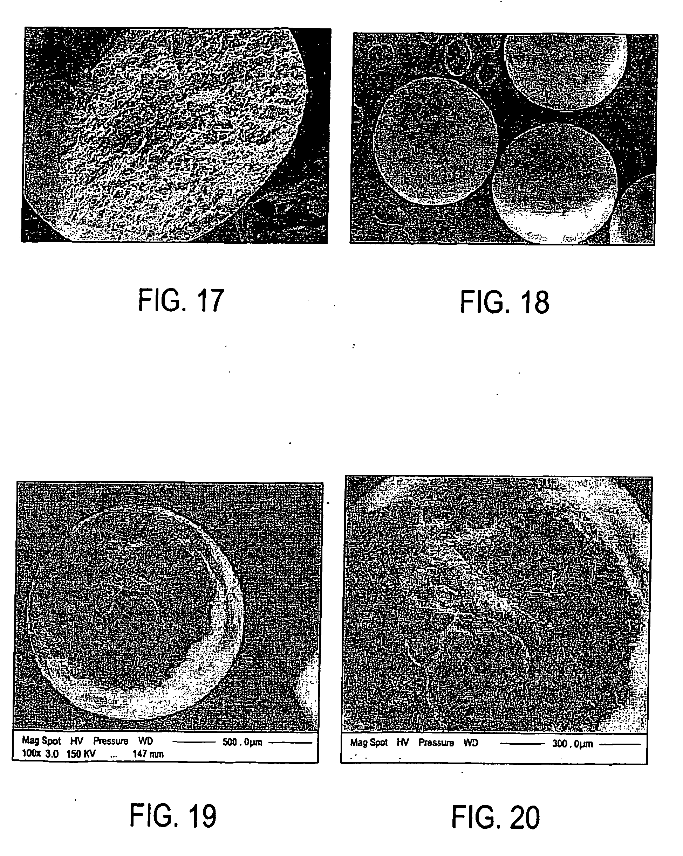

La figure 17 est une vue au microscope électronique à balayage, d'une particule obtenue selon l'invention, et que l'on a cassée sensiblement dans un plan diamétral. La particule a été obtenue par figeage d'un corps gras présentant un point de fusion de 60°C. La particule est parfaitement sphérique et dense, son diamètre est d'environ 500 $\mu$m.

La figure 18 représente plusieurs particules du même produit que la figure 17. Le span est de 0,25.

Les figures 19 et 20 représentent avec deux grossissements différents une particule ayant un diamètre d'environ 500 $\mu$m composée de cristaux allongés de riboflavine micro-encapsulés dans la matière grasse des figures 17 et 18. La longueur des cristaux allongés est de 5 à 10 $\mu$m. Là encore, les particules sont des sphères quasiment parfaites.

**Revendications**

1. Procédé pour pulvériser au moins une substance, dans lequel :

   -- on met en rotation un corps rotatif (11, 71, 72) présentant au moins une surface d'éjection (23, 47, 75, 77, 78) terminée par un bord d'éjection périphérique (24, 84, 85),
   -- on amène la substance sur la surface d'éjection pendant la rotation du corps rotatif (11, 71, 72) et
   -- on entretient une vibration dans le corps rotatif, **caractérisé en ce que** la vibration fait osciller la région du bord d'éjection (24, 84, 85) par rapport à une région centrale du corps rotatif (11, 71, 72) par application d'une excitation au corps rotatif (11, 71, 72) dans la région du bord d'éjection (24, 84, 85).

2. Procédé selon la revendication 1, **caractérisé en ce que** la vibration est entretenue avec une fréquence voisine de la fréquence propre du mode de déformation qui est activé par la vibration dans le corps rotatif (11, 71, 72).

3. Procédé selon l'une des revendications 1 à 2, **caractérisé en ce qu'**on amène comme substance un mélange d'au moins deux composants.

4. Procédé selon la revendication 3, **caractérisé en ce que** les composants comprennent au moins une poudre et un liquide pour former des gouttelettes typiquement composées chacune d'un grain de poudre associé à une certaine quantité de liquide.

5. Procédé selon la revendication 4, **caractérisé en ce que** la poudre et le liquide sont de nature à se mélanger ou réagir l'un avec l'autre pour former des gouttelettes d'aérosol sensiblement homogènes.

6. Procédé selon la revendication 4, **caractérisé en ce que** la poudre et le liquide sont de nature à rester sensiblement séparés pour former des gouttelettes d'aérosol typiquement composées d'un grain de poudre enrobé du composant amené sous forme liquide.

7. Procédé selon l'une des revendications 4 à 6, **caractérisé en ce qu'**on applique une fréquence vibratoire tendant à la formation de gouttelettes dont la taille est en correspondance avec celle des grains de poudre.

8. Procédé selon l'une des revendications 1 à 7, **caractérisé en ce que** l'au moins une surface d'éjection comprend deux surfaces d'éjection (23, 47) ayant un bord d'éjection commun (24).

9. Procédé selon l'une des revendications 1 à 8, **caractérisé en ce que** l'au moins une surface d'éjection comprend deux surfaces d'éjection ayant chacune son propre bord d'éjection (84, 85).

10. Procédé selon la revendication 9, **caractérisé en ce qu'**un paramètre de fonctionnement est réglé différemment pour les deux surfaces (23, 47), de façon que les gouttelettes produites par chacune des deux surfaces (23, 47) aient une granulométrie respective différente.

11. Procédé selon la revendication 8 ou 9, **caractérisé en ce que** l'au moins une substance comprend deux substances que l'on amène chacune sur l'une des surfaces d'éjection et qui forment un aérosol mélangé radialement au- delà des surfaces d'éjection.

12. Procédé selon l'une des revendications 8 à 10, **caractérisé en ce qu'**on alimente les deux surfaces (23, 47) avec la même substance.

13. Procédé pour produire une substance pulvérisée, en particulier une poudre solide, dans lequel on génère un aérosol par un procédé de pulvérisation selon l'une des revendications 1 à 12, **caractérisé en ce qu'**on soumet la région de formation de l'aérosol autour du bord d'éjection (24) à un flux gazeux (111, 117) de traitement des gouttelettes d'aérosol.

14. Procédé selon la revendication 13, **caractérisé en ce que** le flux de traitement comprend un flux (117), de préférence ascendant, à contre-courant par rapport aux gouttelettes se déplaçant en direction générale axiale une fois que leur énergie cinétique centrifuge est dissipée.

15. Procédé selon la revendication 13 ou 14, **caractérisé en ce que** le flux de traitement comprend un flux (111) de forme générale tubulaire sensiblement coaxiale avec l'axe de rotation (13) du corps rotatif (11, 71, 72), de façon que ce flux rencontre la région de formation des gouttelettes radialement au-delà du bord d'éjection (24) et entraîne axialement les gouttelettes, de préférence vers le bas.

16. Procédé selon l'une des revendications 13 à 15, **caractérisé en ce que** le flux de traitement est un flux de solidification des gouttelettes.

17. Procédé selon l'une des revendications 14 à 17, **caractérisé en ce qu'**il est utilisé pour produire une poudre contenant au moins un composant tel que aromatique, pharmaceutique, alimentaire, pré-biotique, pro-biotique, et analogue, susceptible de dégradation ou de destruction sous l'effet d'un échauffement à une température excessive et/ou pendant une durée excessive.

18. Procédé selon l'une des revendications 13 à 17, **caractérisé en ce qu'**avant d'interagir avec l'aérosol, le gaz de traitement passe par un échangeur de chaleur (122) où ce gaz échange des calories avec du gaz de traitement ayant déjà interagi avec l'aérosol.

19. Procédé selon la revendication 18, **caractérisé en ce qu'**une partie au moins du gaz de traitement ayant déjà interagi avec l'aérosol ne traverse aucun système de filtration entre un orifice (118) d'évacuation de la zone d'interaction avec l'aérosol et l'échangeur de chaleur (122).

20. Procédé selon l'une des revendications 13 à 19, **caractérisé en ce qu'**il est appliqué à la production de particules solides composées d'au moins une substance active enrobée dans une substance de micro-encapsulation.

**21.** Procédé selon la revendication 20, **caractérisé en ce que** la substance de micro-encapsulation est filmogène.

**22.** Procédé selon la revendication 20, **caractérisé en ce que** la substance de micro encapsulation est une matrice dans laquelle est noyée l'au moins une substance active.

**23.** Procédé selon l'une des revendications 13 à 19, **caractérisé en ce qu'**on utilise comme gaz de traitement un gaz chaud pour transformer les gouttelettes d'aérosol en particules solides par séchage.

**24.** Procédé selon l'une des revendications 13 à 19, **caractérisé en ce qu'**on fait interagir le gaz de traitement à une température inférieure à celle des gouttelettes d'aérosol pour transformer les gouttelettes d'aérosol en particules solides par figeage.

**25.** Procédé selon la revendication 24, **caractérisé en ce qu'**on alimente la surface d'éjection avec une substance comprenant une matière lipidique à haut point de fusion dans laquelle on a intégré au moins un principe actif.

**26.** Procédé selon la revendication 25, **caractérisé en ce que** le principe actif comprend des solides divisés à l'échelle nanométrique.

**27.** Procédé selon la revendication 25, **caractérisé en ce que** le principe actif comprend au moins une huile essentielle.

**28.** Procédé selon l'une des revendications 13 à 19, **caractérisé en ce qu'**il est utilisé pour mettre sous forme de sphères monodisperses ou à polydispersité maîtrisée, un ou plusieurs actifs de formes hétérogènes non sphériques et à granulométrie polydisperse.

**29.** Procédé selon la revendication 28, **caractérisé en ce qu'**on soumet les sphères obtenues à une étape de micro-encapsulation, en particulier au moyen d'un procédé selon la revendication 20.

**30.** Procédé selon l'une des revendications 13 à 19, **caractérisé en ce qu'**on réalise sur au moins deux surfaces d'éjection (23, 47), des gouttelettes ayant au moins deux tailles différentes pour obtenir une poudre formée d'un mélange de particules ayant au moins deux tailles différentes.

**31.** Tête de pulvérisation comprenant :

-- un corps rotatif (11, 71, 72) relié à un moteur (16) d'entraînement en rotation autour d'un axe de rotation (13) et portant solidairement au moins une surface d'éjection (23, 47) terminée par un bord périphérique d'éjection (24 ; 84, 85),
-- des moyens d'acheminement (21, 22, 48, 52) d'au moins une substance jusque sur l'au moins une surface d'éjection (23, 47),
-- des moyens d'excitation (26, 46, 56, 66) pour générer une vibration de la surface d'éjection, **caractérisée en ce que** les moyens d'excitation sont conçus pour faire vibrer le bord d'éjection (24) par déformation vibratoire du corps rotatif (11, 71, 72), ces moyens d'excitation (26, 46, 56, 66) jouxtant le corps rotatif (11, 71, 72) à proximité du bord d'éjection (24).

**32.** Tête de pulvérisation selon la revendication 31, **caractérisée en ce que** le corps rotatif (11, 71, 72) est creux et les moyens d'excitation (66) sont au moins en partie situés dans le corps rotatif.

**33.** Tête de pulvérisation selon l'une des revendications 31 à 32, **caractérisée en ce que** les moyens d'excitation (46) sont capacitifs, et comprennent de préférence une armature annulaire mobile solidaire du corps rotatif (11) ou constituée par celui-ci, et une armature annulaire fixe (46) à laquelle est appliqué un potentiel à variation périodique.

**34.** Tête de pulvérisation selon l'une des revendications 31 à 32, **caractérisée en ce que** les moyens d'excitation (56) sont électromagnétiques et comprennent de préférence un corps magnétique fixé au corps rotatif (11) ou constitué par celui-ci et un électro-aimant annulaire placé au voisinage du bord périphérique (24) et auquel on applique un potentiel à variation périodique.

**35.** Tête de pulvérisation selon l'une des revendications 31 à 32, **caractérisée en ce que** les moyens d'excitation comprennent des cellules piézo-électriques (26, 66) fixées au corps rotatif (11).

**36.** Tête de pulvérisation selon l'une des revendications 31 à 35, **caractérisée en ce que** les moyens d'excitation (26) sont raccordés électriquement par un conducteur (32) monté le long d'un arbre d'entraînement (12) du corps rotatif (11), et un contact tournant (29) raccordant ce conducteur (32) avec une électronique fixe (31), le moteur (16) étant de préférence situé entre le corps rotatif (11) et le contact tournant (29).

**37.** Tête de pulvérisation selon la revendication 36, **caractérisée en ce que** l'arbre (12) est creux et recouvert intérieurement d'un manchon (37) canalisant la substance à pulvériser, et le conducteur (32) est placé entre la face intérieure de l'arbre (12) et le manchon (37).

**38.** Tête de pulvérisation selon l'une des revendications 32 à 36, **caractérisée en ce que** les moyens d'acheminement comprennent au moins un conduit formé axialement dans l'arbre creux (12) du moteur d'entraînement (16).

**39.** Tête de pulvérisation selon la revendication 38, **caractérisée en ce que** l'au moins un conduit comprend plusieurs conduits coaxiaux (38, 39) ayant pour axe commun l'axe de rotation (13) du corps rotatif (11).

**40.** Tête de pulvérisation selon la revendication 39, **caractérisée en ce que** deux au moins des conduits (38, 39) débouchent dans une zone de mélange (21) dans l'arbre creux (12).

**41.** Tête de pulvérisation selon la revendication 38 ou 39, **caractérisée en ce que** des conduits différents (38, 39) débouchent séparément sur des faces différentes du corps rotatif (71).

**42.** Tête de pulvérisation selon l'une des revendications 38 à 41, **caractérisée en ce qu'**au moins un conduit (21, 38) traverse le corps rotatif (11, 72) pour déboucher par un orifice (22, 82) dans une surface d'éjection (23) orientée dans une direction essentiellement opposée au moteur d'entraînement (16).

**43.** Tête de pulvérisation selon l'une des revendications 38 à 42, **caractérisée en ce qu'**au moins un conduit (39) débouche par des moyens de passage radial (74) sur une surface d'éjection (75) essentiellement orientée vers le moteur d'entraînement (16).

**44.** Tête de pulvérisation selon l'une des revendications 38 à 43, **caractérisée en ce que** le corps rotatif comprend au moins deux corps élémentaires (71, 72) se succédant le long de l'axe, et **en ce qu'**au moins un conduit débouche par des moyens de passage radial (74, 76) entre les deux corps élémentaires.

**45.** Tête de pulvérisation selon l'une des revendications 38 à 44, **caractérisée en ce que** le moteur (16) est placé axialement entre le corps rotatif (11, 71, 72) d'une part et des moyens (41, 43) de raccordement du conduit avec une source de substance d'autre part.

**46.** Tête de pulvérisation selon l'une des revendications 31 à 45, **caractérisée en ce que** les moyens d'acheminement comprennent un conduit annulaire (48) formé autour du moteur d'entraînement (16) et débouchant par une fente annulaire (52) autour d'une jonction (22) entre l'arbre d'entraînement (12) et une surface d'éjection (47).

**47.** Tête de pulvérisation selon l'une des revendications 31 à 46, **caractérisée par** un moyen (53) de refroidissement du moteur (16) par circulation d'un liquide de refroidissement en relation d'échange thermique avec le moteur.

**48.** Tête de pulvérisation selon l'une des revendications 31 à 47, **caractérisée en ce que** les moyens d'entraînement (16), les moyens d'acheminement (38, 39, 48), et les moyens d'excitation (26, 46, 56, 66) sont entièrement situés d'un même côté par rapport à la surface d'éjection (23).

**49.** Appareil de production d'une substance pulvérulente, **caractérisé en ce qu'**il comprend une enceinte (101), au moins une tête de pulvérisation (104) selon l'une des revendications 31 à 48 montée dans l'enceinte, des moyens pour générer un flux gazeux de traitement (111) qui rencontre la zone de formation de l'aérosol dans l'enceinte, et au moins un orifice (114, 118, 119, 143) de collecte de la substance traitée et du gaz de traitement usé.

**50.** Appareil selon la revendication 49, **caractérisé en ce que** les moyens pour générer un flux gazeux comprennent des moyens de génération à co-courant (109) générant autour de la tête (104) un flux essentiellement tubulaire (111) qui rencontre la zone de formation de l'aérosol et entraîne les gouttelettes dans une direction générale axiale.

**51.** Appareil selon la revendication 49 ou 50, **caractérisé en ce que** les moyens pour générer un flux gazeux comprennent des moyens (112, 137) de génération d'un contre-courant dirigé vers la tête de pulvérisation (104), dans une direction générale parallèle à l'axe de rotation (13) de la surface d'éjection (23).

52. Appareil selon l'une des revendications 49 à 51, **caractérisé en ce qu'**il comprend un échangeur de chaleur (122) comprenant un premier trajet (121) traversé par du gaz de traitement qui est déjà passé par l'enceinte (101) et un deuxième trajet (123) traversé par du gaz de traitement préalablement à sa pénétration dans l'enceinte (101),

53. Appareil selon la revendication 52, **caractérisé en ce qu'**il est démuni de système de filtration entre l'intérieur de l'enceinte (101) et le premier trajet (121) de l'échangeur de chaleur (122).


**Patentansprüche**

1. Verfahren zum Zerstäuben mindestens einer Substanz, wobei:

   - ein Drehkörper (11, 71, 72) in Drehung versetzt wird, der mindestens eine Ausstoßfläche (23, 47 75, 77, 78) aufweist, die in einem umlaufenden Ausstoßrand (24, 84, 85) endet,
   - die Substanz der Ausstoßfläche während der Drehung des Drehkörpers (11, 71, 72) zugeführt wird, und
   - eine Schwingung in dem Drehkörper unterhalten wird, **dadurch gekennzeichnet, dass** die Schwingung den Bereich des Ausstoßrands (24, 84, 85) bezogen auf einen zentralen Bereich des Drehkörpers (11, 71, 72) durch Anlegen einer Anregung an den Drehkörper (11, 71, 72) im Bereich des Ausstoßrands (24, 84, 85) oszillieren lässt.

2. Verfahren nach Anspruch 1, **dadurch gekennzeichnet, dass** die Schwingung mit einer Frequenz unterhalten wird, die nahe an der Eigenfrequenz des Deformationsmodus liegt, der durch die Schwingung in dem Drehkörper (11, 71, 72) aktiviert wird.

3. Verfahren nach einem der Ansprüche 1 bis 2, **dadurch gekennzeichnet, dass** als Substanz ein Gemisch aus mindestens zwei Komponenten zugeführt wird.

4. Verfahren nach Anspruch 3, **dadurch gekennzeichnet, dass** die Komponenten mindestens ein Pulver und eine Flüssigkeit umfassen, um Tröpfchen zu bilden, die in der Regel jeweils aus einem Pulverkorn bestehen, das mit einer bestimmten Menge an Flüssigkeit assoziiert ist.

5. Verfahren nach Anspruch 4, **dadurch gekennzeichnet, dass** das Pulver und die Flüssigkeit so beschaffen sind, dass sie sich mischen oder miteinander reagieren, um im Wesentlichen homogene Aerosoltröpfchen zu bilden.

6. Verfahren nach Anspruch 4, **dadurch gekennzeichnet, dass** das Pulver und die Flüssigkeit so beschaffen sind, dass sie im Wesentlichen getrennt bleiben, um Aerosoltröpfchen zu bilden, die in der Regel aus einem Pulverkorn bestehen, das von der Komponente umhüllt wird, die in flüssiger Form zugeführt wird

7. Verfahren nach einem der Ansprüche 4 bis 6, **dadurch gekennzeichnet, dass** eine Schwingungsfrequenz angelegt wird, die die Bildung von Tröpfchen fördert, deren Größe der Größe der Pulverkörner entspricht.

8. Verfahren nach einem der Ansprüche 1 bis 7, **dadurch gekennzeichnet, dass** die mindestens eine Ausstoßfläche zwei Ausstoßflächen (23, 47) umfasst, die einen gemeinsamen Ausstoßrand (24) aufweisen.

9. Verfahren nach einem der Ansprüche 1 bis 8, **dadurch gekennzeichnet, dass** die mindestens eine Ausstoßfläche zwei Ausstoßflächen (23, 47) umfasst, die jeweils ihren eigenen Ausstoßrand (84, 85) aufweisen.

10. Verfahren nach Anspruch 9, **dadurch gekennzeichnet, dass** ein Betriebsparameter für die beiden Oberflächen (23, 47) verschieden eingestellt wird, damit die von jeder der beiden Oberflächen (23, 47) erzeugten Tröpfchen jeweils eine unterschiedliche Granulometrie aufweisen.

11. Verfahren nach Anspruch 8 oder 9, **dadurch gekennzeichnet, dass** die mindestens eine Substanz zwei Substanzen umfasst, die jeweils einer der Ausstoßflächen zugeführt werden und die ein Aerosol bilden, das jenseits der Ausstoßflächen radial gemischt wird.

**12.** Verfahren nach einem der Ansprüche 8 bis 10, **dadurch gekennzeichnet, dass** die beiden Oberflächen (23, 47) mit der gleichen Substanz beschickt werden.

**13.** Verfahren zum Herstellen einer zerstäubten Substanz, insbesondere eines festen Pulvers, wobei ein Aerosol durch ein Sprühverfahren nach einem der Ansprüche 1 bis 12 erzeugt wird, **dadurch gekennzeichnet, dass** der Bereich zur Bildung des Aerosols um den Ausstoßrand (24) herum einem gasförmigen Strom (111, 117) zur Behandlung der Aerosoltröpfchen ausgesetzt wird.

**14.** Verfahren nach Anspruch 13, **dadurch gekennzeichnet, dass** der Behandlungsstrom einen bevorzugt aufsteigenden Strom (117) umfasst, der bezogen auf die Tröpfchen, die sich in einer im Allgemeinen axialen Richtung bewegen, sobald ihre zentrifugale kinetische Energie aufgebraucht wurde, im Gegenstrom verläuft.

**15.** Verfahren nach Anspruch 13 oder 14, **dadurch gekennzeichnet, dass** der Behandlungsstrom einen Strom (111) mit einer im Allgemeinen röhrenförmigen Form umfasst, der im Wesentlichen koaxial mit der Drehachse (13) des Drehkörpers (11, 71, 72) ist, damit dieser Strom radial auf den Bereich zur Bildung der Tröpfchen jenseits des Ausstoßrands (24) trifft und die Tröpfchen axial, bevorzugt nach unten, mitführt.

**16.** Verfahren nach einem der Ansprüche 13 bis 15, **dadurch gekennzeichnet, dass** der Behandlungsstrom ein Strom zur Verfestigung der Tröpfchen ist.

**17.** Verfahren nach einem der Ansprüche 14 bis 17, **dadurch gekennzeichnet, dass** es verwendet wird, um ein Pulver herzustellen, das mindestens eine Komponente, wie etwa eine aromatische, pharmazeutische, alimentäre, präbiotische, probiotische Komponente und Analoga enthält, die unter der Einwirkung einer Erwärmung auf eine zu hohe Temperatur und/oder für eine zu lange Dauer für Qualitätsverlust oder Zerstörung anfällig sind.

**18.** Verfahren nach einem der Ansprüche 13 bis 17, **dadurch gekennzeichnet, dass** das Behandlungsgas, bevor es mit dem Aerosol interagiert, einen Wärmetauscher (122) durchläuft, in dem dieses Gas Kalorien mit dem Behandlungsgas austauscht, das bereits mit dem Aerosol interagiert hat.

**19.** Verfahren nach Anspruch 18, **dadurch gekennzeichnet, dass** mindestens ein Teil des Behandlungsgases, das bereits mit dem Aerosol interagiert hat, zwischen einer Auslassöffnung (118) der Interaktionszone mit dem Aerosol und dem Wärmetauscher (122) kein Filtrationssystem durchquert.

**20.** Verfahren nach einem der Ansprüche 13 bis 19, **dadurch gekennzeichnet, dass** es bei der Herstellung von festen Partikeln angewendet wird, die aus mindestens einer aktiven Substanz bestehen, die von einer Mikroverkapselungssubstanz umhüllt ist.

**21.** Verfahren nach Anspruch 20, **dadurch gekennzeichnet, dass** die Mikroverkapselungssubstanz filmbildend ist.

**22.** Verfahren nach Anspruch 20, **dadurch gekennzeichnet, dass** die Mikroverkapselungssubstanz eine Matrix ist, in die die mindestens eine aktive Substanz getaucht wird.

**23.** Verfahren nach einem der Ansprüche 13 bis 19, **dadurch gekennzeichnet, dass** als Behandlungsgas ein Heißgas verwendet wird, um die Aerosoltröpfchen durch Trocknung in feste Partikel zu verwandeln.

**24.** Verfahren nach einem der Ansprüche 13 bis 19, **dadurch gekennzeichnet, dass** man das Behandlungsgas bei einer Temperatur interagieren lässt, die unterhalb der Temperatur der Aerosoltröpfchen liegt, um die Aerosoltröpfchen durch Erstarrung in feste Partikel zu verwandeln.

**25.** Verfahren nach Anspruch 24, **dadurch gekennzeichnet, dass** die Ausstoßfläche mit einer Substanz beschickt wird, die einen lipidhaltige Stoff mit hohem Schmelzpunkt umfasst, in den mindestens ein Wirkstoff integriert wurde.

**26.** Verfahren nach Anspruch 25, **dadurch gekennzeichnet, dass** der Wirkstoff im Nanometerbereich feinteilige Feststoffe umfasst.

**27.** Verfahren nach Anspruch 25, **dadurch gekennzeichnet, dass** der Wirkstoff mindestens ein ätherisches Öl umfasst.

**28.** Verfahren nach einem der Ansprüche 13 bis 19, **dadurch gekennzeichnet, dass** es verwendet wird, um einen oder mehrere Wirkstoffe mit heterogenen, nicht kugelförmigen Formen und mit einer polydispersen Granulometrie in die Form von Kugeln zu bringen, die
monodispers sind oder eine kontrollierte Polydispersität aufweisen.

29. Verfahren nach Anspruch 28, **dadurch gekennzeichnet, dass** die erhaltenen Kugeln einem Schritt zur Mikroverkapselung, insbesondere mithilfe eines Verfahrens nach Anspruch 20, unterzogen werden.

30. Verfahren nach einem der Ansprüche 13 bis 19, **dadurch gekennzeichnet, dass** auf mindestens zwei Ausstoßflächen (23, 47) Tröpfchen hergestellt werden, die mindestens zwei verschiedene Größen aufweisen, um ein Pulver zu erhalten, das aus einem Gemisch aus Partikeln ausgebildet wird, die mindestens zwei verschiedene Größen aufweisen.

31. Sprühkopf, umfassend:

- einen Drehkörper (11, 71, 72), der mit einem Antriebsmotor (16) verbunden ist, der sich um eine Drehachse (13) dreht und der mit mindestens einer Ausstoßfläche (23, 47) fest verbunden ist, die in einem umlaufenden Ausstoßrand (24; 84, 85) endet,
- Mittel zur Beförderung (21, 22, 48, 52) mindestens einer Substanz bis zu der mindestens einen Ausstoßfläche (23, 47),
- Mittel zur Anregung (26, 46, 56, 66), um eine Schwingung der Ausstoßfläche zu erzeugen, **dadurch gekennzeichnet, dass** die Mittel zur Anregung so konzipiert sind, dass sie den Ausstoßrand (24) durch Deformationsschwingung des Drehkörpers (11, 71, 72) schwingen lassen, wobei diese Mittel zur Anregung (26, 46, 56, 66) an den Drehkörper (11, 71, 72) in der Nähe des Ausstoßrands (24) angrenzen.

32. Sprühkopf nach Anspruch 31, **dadurch gekennzeichnet, dass** der Drehkörper (11, 71, 72) hohl ist und die Mittel zur Anregung (66) mindestens teilweise in dem Drehkörper liegen.

33. Sprühkopf nach einem der Ansprüche 31 bis 32, **dadurch gekennzeichnet, dass** die Mittel zur Anregung (46) kapazitiv sind und bevorzugt einen beweglichen, ringförmigen Rahmen, der mit dem Drehkörper (11) fest verbunden ist oder aus diesem besteht, und einen festen, ringförmigen Rahmen (46) umfassen, an den ein periodisch variierendes Potenzial angelegt wird.

34. Sprühkopf nach einem der Ansprüche 31 bis 32, **dadurch gekennzeichnet, dass** die Mittel zur Anregung (56) elektromagnetisch sind und bevorzugt einen Magnetkörper, der am Drehkörper (11) befestigt ist oder aus diesem besteht, und einen ringförmigen Elektromagneten umfassen, der in der Nähe des Außenrands (24) angeordnet ist und an den ein periodisch variierendes Potenzial angelegt wird.

35. Sprühkopf nach einem der Ansprüche 31 bis 32, **dadurch gekennzeichnet, dass** die Mittel zur Anregung piezoelektrische Zellen (26, 66) umfassen, die am Drehkörper (11) befestigt sind.

36. Sprühkopf nach einem der Ansprüche 31 bis 35, **dadurch gekennzeichnet, dass** die Mittel zur Anregung (26) elektrisch mit einem Leiter (32) verbunden sind, der längs einer Antriebswelle (12) des Drehkörpers (11) angebracht ist, und ein Drehkontakt (29) der diesen Leiter (32) mit einer festen Elektronik (31) verbindet, wobei der Motor (16) bevorzugt zwischen dem Drehkörper (11) und dem Drehkontakt (29) liegt.

37. Sprühkopf nach Anspruch 36, **dadurch gekennzeichnet, dass** die Welle (12) hohl ist und innen mit einer Manschette (37) bedeckt ist, die die zu zerstäubende Substanz kanalisiert, und der Leiter (32) ist zwischen der Innenseite der Welle (12) und der Manschette (37) angeordnet.

38. Sprühkopf nach einem der Ansprüche 32 bis 36, **dadurch gekennzeichnet, dass** die Mittel zur Beförderung mindestens eine Leitung umfassen, die axial in der Hohlwelle (12) des Antriebsmotors (16) ausgebildet wird.

39. Sprühkopf nach Anspruch 38, **dadurch gekennzeichnet, dass** die mindestens eine Leitung mehrere koaxiale Leitungen (38, 39) umfasst, deren gemeinsame Achse die Drehachse (13) des Drehkörpers (11) ist.

40. Sprühkopf nach Anspruch 39, **dadurch gekennzeichnet, dass** mindestens zwei der Leitungen (38, 39) in einer Zone zur Mischung (21) in der Hohlwelle (12) münden.

**41.** Sprühkopf nach Anspruch 38 oder 39, **dadurch gekennzeichnet, dass** verschiedene Leitungen (38, 39) getrennt auf verschiedenen Seiten des Drehkörpers (71) münden.

**42.** Sprühkopf nach einem der Ansprüche 38 bis 41, **dadurch gekennzeichnet, dass** mindestens eine Leitung (21, 38) den Drehkörper (11, 72) durchläuft, um über eine Öffnung (22, 82) in einer Ausstoßfläche (23) zu münden, die in einer Richtung ausgerichtet ist, die dem Antriebsmotor (16) im Wesentlichen gegenüberliegt.

**43.** Sprühkopf nach einem der Ansprüche 38 bis 42, **dadurch gekennzeichnet, dass** mindestens eine Leitung (39) über radialen Durchgangsmitteln (74) auf einer Ausstoßfläche (75) mündet, die im Wesentlichen in Richtung des Antriebsmotors (16) ausgerichtet ist.

**44.** Sprühkopf nach einem der Ansprüche 38 bis 43, **dadurch gekennzeichnet, dass** der Drehkörper mindestens zwei Körperelemente (71, 72) umfasst, die längs der Achse aufeinander folgen, und dadurch, dass mindestens eine Leitung über radiale Durchgangsmittel (74, 76) zwischen den beiden Körperelementen mündet.

**45.** Sprühkopf nach einem der Ansprüche 38 bis 44, **dadurch gekennzeichnet, dass** der Motor (16) axial zwischen dem Drehkörper (11, 71, 72) einerseits und Mitteln (41, 43) zum Verbinden der Leitung mit einer Substanzquelle andererseits angeordnet ist.

**46.** Sprühkopf nach einem der Ansprüche 31 bis 45, **dadurch gekennzeichnet, dass** die Mittel zur Beförderung eine ringförmige Leitung (48) umfassen, die um den Antriebsmotor (16) ausgebildet wird und über einen ringförmigen Spalt (52) um ein Verbindungsstück (22) zwischen der Antriebswelle 12) und einer Ausstoßfläche (47) mündet.

**47.** Sprühkopf nach einem der Ansprüche 31 bis 46, **gekennzeichnet durch** ein Mittel (53) zur Kühlung des Motors (16) **durch** Umlauf einer Kühlflüssigkeit in einer Wärmeaustauschbeziehung mit dem Motor.

**48.** Sprühkopf nach einem der Ansprüche 31 bis 47, **dadurch gekennzeichnet, dass** die Mittel zum Antrieb (16), die Mittel zur Beförderung (38, 39, 48) und die Mittel zur Anregung (26, 46, 56, 66), bezogen auf die Ausstoßfläche (23), zur Gänze auf einer gleichen Seite liegen.

**49.** Vorrichtung zur Herstellung einer pulverförmigen Substanz, **dadurch gekennzeichnet, dass** sie ein Gehäuse (101), mindestens einen Sprühkopf (104) nach einem der Ansprüche 31 bis 48, der in dem Gehäuse angebracht ist, Mittel zum Erzeugen eines gasförmigen Behandlungsstroms (111), der auf die Zone zur Bildung des Aerosols in dem Gehäuse trifft, und mindestens eine Öffnung (114, 118, 119, 143) zum Sammeln der behandelten Substanz und des verbrauchten Behandlungsgases umfasst.

**50.** Vorrichtung nach Anspruch 49, **dadurch gekennzeichnet, dass** die Mittel zum Erzeugen eines gasförmigen Stroms Mittel zum Erzeugen eines Gleichstroms (109) umfassen, die um den Kopf (104) herum einen im Wesentlichen röhrenförmigen Strom (111) erzeugen, der auf die Zone zur Bildung des Aerosols trifft und die Tröpfchen in einer im Allgemeinen axialen Richtung mitführt.

**51.** Vorrichtung nach Anspruch 49 oder 50, **dadurch gekennzeichnet, dass** die Mittel zum Erzeugen eines gasförmigen Stroms Mittel (112, 137) zum Erzeugen eines Gegenstroms umfassen, der in Richtung des Sprühkopfs (104) in einer im Allgemeinen parallelen Richtung zur Drehachse (13) der Ausstoßfläche (23) gelenkt wird.

**52.** Vorrichtung nach einem der Ansprüche 49 bis 51, **dadurch gekennzeichnet, dass** sie einen Wärmetauscher (122) umfasst, der einen ersten Weg (121), der von Behandlungsgas durchströmt wird, das das Gehäuse (101) bereits passiert hat und einen zweiten Weg (123) umfasst, der von Behandlungsgas vor dessen Eindringen in das Gehäuse (101) durchströmt wird.

**53.** Vorrichtung nach Anspruch 52, **dadurch gekennzeichnet, dass** sie zwischen dem Inneren des Gehäuses (101) und dem ersten Weg (121) des Wärmetauschers (122) kein Filtrationssystems aufweist.

**Claims**

**1.** A method for pulverising at least one substance, in which:

-- a rotary body (11, 71, 72), having at least one ejection surface (23, 47, 75, 77, 78) ending in a peripheral ejection edge (24, 84, 85), is in rotation,
-- the substance is fed onto the ejection surface during rotation of the rotary body (11, 71, 72), and
-- a vibration in the rotary body is sustained,

**characterised in that** the vibration makes the area of the ejection edge (24, 84, 85) oscillate relative to a central area of the rotary body (11, 71, 72), by applying a stimulus to the rotary body (11, 71, 72) in the area of the ejection edge (24, 84, 85).

2. Method according to claim according to claim 1, **characterized in that** the vibration is maintained with a frequency close to the sympathetic vibration frequency of the mode of deformation which is activated by the vibration in the rotary body (11, 71, 72).

3. Method according to any of claims 1 to 2, **characterized in that** the substance to be pulverised is a mixture of at least two constituents.

4. Method according to claim 3, **characterized in that** the constituents include at least one powder and one liquid to form droplets typically made up each one of a powder particle associated with a certain quantity of liquid.

5. Method according to claim 4, **characterized in that** the powder and the liquid are likely to mix or react with one another to form substantially homogeneous aerosol droplets.

6. Method according to claim 4, **characterized in that** the powder and the liquid are likely to remain substantially separate to form aerosol droplets typically made up of a powder particle coated with the constituent which is fed in liquid form.

7. Method according to any of claims 4 to 6, **characterized in that** one applies a vibration frequency which will produce droplets whose size corresponds to that of the powder grains.

8. Method according to any of claims 1 to 7, **characterized in that** at least one ejection surface includes two ejection surfaces (23, 47) having a common ejection edge (24).

9. Method according to any of claims 1 to 8, **characterized in that** at least one ejection surface includes two ejection surfaces, each one with its own ejection edge (84, 85).

10. Method according to claim 9, **characterized in that** a parameter of operation is differently regulated for the two surfaces (23, 47), so that the droplets produced by each of two surfaces (23, 47) have respective different particle sizes.

11. Method according to claim 8 or 9, **characterized in that** at least one substance includes two substances that are each brought to one ejection surface and which form an aerosol mixed radially beyond the ejection surfaces.

12. Method according to any of claims 8 to 10, **characterized in that** one feeds two surfaces (23, 47) with the same substance.

13. Method for producing a pulverised substance, in particular a solid powder, in which an aerosol is produced by a pulverisation method according to any of claims 1 to 12, **characterized in that** the aerosol formation area around the ejection edge (24) is subjected to a gas flow (111, 117) for the treatment of the aerosol droplets.

14. Method according to claim 13, **characterized in that** the treatment flow includes a flow ( 117), preferably ascending, with counter-current relative to the droplets moving generally in an axial direction once their centrifugal kinetic energy is dissipated.

15. Method according to claim 13 or 14, **characterized in that** the treatment flow includes a flow (111) of tubular general form substantially coaxial with the axis of rotation (13) of the rotary body (11, 71, 72), so that this flow radially meets the area of droplet formation beyond the ejection edge (24) and draws the droplets axially, preferably downwards.

16. Method according to one of the claims 13 to 15, **characterized in that** the treatment flow is a droplet solidification flow.

17. Method according to one of the claims 14 to 17, **characterized in that** it is used to produce a powder containing at least one constituent such as aromatic, pharmaceutical, food, pre-biotic, pro-biotic, and similar, at risk of degradation or destruction under, the effect of excessive temperature and/or excessively long heating.

18. Method according to one of the claims 13 to 17, **characterized in that** before interacting with the aerosol, the treatment gas passes through a heat exchanger (122) where this gas exchanges heat energy with the treatment gas having already interacted with the aerosol.

19. Method according to claim 18, **characterized in that** a part at least of treatment gas having already interacted with the aerosol passes through no filtration system between an opening (118) of evacuation of the interaction zone with the aerosol and the heat exchanger (122).

20. Method according to one of the claims 13 to 19, **characterized in that** it is applied to the production of solid particles made up of at least one active substance coated in a micro-encapsulation substance.

21. Method according to claim 20, **characterized in that** the microencapsulation substance is film-forming.

22. Method according to claim 20, **characterized in that** the microencapsulation substance is a matrix in which at least one active substance is coated.

23. Method according to one of the claims 13 to 19, **characterized in that** one uses as treatment gas a hot gas, to transform the aerosol droplets into solid particles by drying.

24. Process according to one of the claims 13 to 19, **characterized in that** one makes the treatment gas interact at a lower temperature than that of the aerosol droplets to transform the aerosol droplets into solid particles by freezing.

25. Method according to claim 24, **characterized in that** the ejection surface is fed with a substance including a lipidic matter with a high melting point in which at least one active ingredient is integrated.

26. Method according to claim 25, **characterized in that** the active ingredient includes solids of nanometre scale.

27. Method according to claim 25, **characterized in that** the active ingredient includes at least one essential oil.

28. Method according to one of the claims 13 to 19, **characterized in that** it is used to put in the form of monodisperse or controlled polydisperse spheres one or more potents of heterogeneous nonspherical forms and with polydisperse particle size.

29. Method according to claim 28, **characterized in that** one subjects the spheres obtained to a microencapsulation stage, in particular by means of a process according to claim 20.

30. Method according to one of the claims 13 to 19, **characterized in that** droplets having at least two different sizes are produced on at least two ejection surfaces (23, 47) to obtain a powder made up of a mixture of particles of at least two different sizes.

31. Pulverisation head including:

   -- a rotary body (11, 71, 72) connected to a drive motor (16) around an axis of rotation (13) and carrying jointly at least one ejection surface (23, 47) ending in a peripheral ejection edge (24; 84, 85),
   -- delivery means (21, 22, 48, 52) of at least one substance to at least one ejection surface (23, 47),
   -- stimulus means (26, 46, 56, 66) to generate a vibration of the ejection surface,

   **characterized in that** the stimulus means are conceived to make the ejection edge (24) vibrate by vibratory deformation of the rotary body (11, 71, 72), the stimulus means (26, 46, 56, 66) being next to the rotary body (11, 71, 72) near the ejection edge (24).

32. Pulverisation head according to claim 31, **characterized in that** the rotary body (11, 71, 72) is hollow and the stimulus means (66) are at least partly located in the rotary body.

33. Pulverisation head according to any of claims 31 to 32, **characterized in that** the stimulus means (46) are capacitive, and preferably include a mobile annular reinforcement integrally linked to the rotary body (11) or constituted by this, and a fixed annular reinforcement (46) to which is applied a periodic variation potential.

34. Pulverisation head according to any of claims 31 to 32, **characterized in that** the stimulus means (56) are electromagnetic and preferably include a magnetic body fixed to the rotary body (11) or constituted by this and an annular electromagnet placed in the vicinity of the peripheral edge (24) and to which one applies a periodic variation potential.

35. Pulverisation head according to any of claims 31 to 32, **characterized in that** the stimulus means include piezoelectric cells (26, 66) fixed at the rotary body (11).

36. Pulverisation head according to any of claims 31 to 35, **characterized in that** the stimulus means (26) are electrically connected by a conductor (32) assembled along a drive shaft (12) of the rotary body (11), and a turning contact (29) connecting this conductor (32) with fixed electronics (31), the motor (16) being preferably located between the rotary body (11) and the rotating contact (29).

37. Pulverisation head according to claim 36, **characterized in that** the shaft (12) is hollow and internally covered with a sleeve (37) channelling the substance to be pulverised, and the conductor (32) is placed between the interior face of the shaft (12) and the sleeve (37).

38. Pulverisation head according to any of claims 32 to 36, **characterized in that** the delivery means include at least one conduit formed axially in the hollow shaft (12) of the drive motor (16).

39. Pulverisation head according to claim 38, **characterized in that** at least one conduit includes several coaxial conduits (38, 39) having as their common axis the axis of rotation (13) of the rotary body (11).

40. Pulverisation head according to claim 39, **characterized in that** at least two of the conduits (38, 39) emerge in a mixing zone (21) in the hollow shaft (12).

41. Pulverisation head according to claim 38 or 39, **characterized in that** different conduits (38, 39) separately lead to different faces of the rotary body (71).

42. Pulverisation head according to any of claims 38 to 41, **characterized in that** at least one conduit (21, 38) crosses the rotary body (11, 72) to emerge by an opening (22, 82) in an ejection surface (23) oriented in a direction primarily opposed to the drive motor (16).

43. Pulverisation head according to any of claims 38 to 42, **characterized in that** at least one conduit (39) leads by means of a radial passage (74) to an ejection surface (75) primarily directed towards the drive motor (16).

44. Pulverisation head according to any of claims 38 to 43, **characterized in that** the rotary body includes at least two elementary bodies (71, 72) following one another along the axis, and **in that** at least one conduit emerges by means of a radial passage (74, 76) between the two elementary bodies.

45. Pulverisation head according to any of claims 38 to 44, **characterized in that** the motor (16) is axially placed between the rotary body (11, 71, 72) on one hand and of the connection means (41, 43) of the conduit with a source of substance on the other hand.

46. Pulverisation head according to any of claims 31 to 45, **characterized in that** the delivery means include an annular conduit (48) formed around the drive motor (16) and emerging by an annular slit (52) around a junction (22) between the drive shaft (12) and the ejection surface (47).

47. Pulverisation head according to any of claims 31 to 46, **characterized by** a means (53) of cooling the motor (16) by circulation of a liquid coolant for heat exchange with the motor.

48. Pulverisation head according to any of claims 31 to 47, **characterized in that** the drive means (16), the delivery means (38, 39, 48), and the stimulus means (26, 46, 56, 66) are entirely located on the same side relative to the ejection surface (23).

**49.** Apparatus for producing for a substance in powder form, **characterized in that** it includes an enclosure (101), at least one pulverisation head (104) according to any of claims 31 to 48 mounted in the enclosure, means to generate a treatment gas flow (111) which meets the aerosol formation zone in the enclosure, and at least one opening (114, 118, 119, 143) for collection of the treated substance and used treatment gas.

**50.** Apparatus according to claim 49, **characterized in that** the means to generate a gas flow include co-current generation (109) generating around the head (104) a substantially tubular flow (111) which meets the aerosol formation zone and draws the droplets in a general axial direction.

**51.** Apparatus according to claim 49 or 50, **characterized in that** the means to generate a gas flow include means (112, 137) of generating a counter-current directed towards the pulverisation head (104), in a general direction parallel with the axis of rotation (13) of the ejection surface (23).

**52.** Apparatus according to any of claims 49 to 51, **characterized in that** it includes a heat exchanger (122) including a first path (121) crossed by treatment gas which has already passed through the enclosure (101) and a second path (123) crossed by treatment gas before entering the enclosure (101),

**53.** Apparatus according to claim 52, **characterized in that** it has no filtration system between the interior of the enclosure (101) and the first path (121) of the heat exchanger (122).

Figure 1

# Figure 2

# Figure 3

# Figure 4

38
39
28
45
16
46
31
24
27
11
22
21

Figure 5

Figure 6

Figure 7

Figure 8

FIG. 9

FIG. 10

FIG. 11

FIG. 12

FIG. 13

FIG. 14

FIG. 15

FIG. 16

FIG. 17

FIG. 18

Mag Spot HV Pressure WD ——— 500.0µm ———
100x 3.0 150 KV ... 147 mm

FIG. 19

Mag Spot HV Pressure WD ——— 300.0µm ———

FIG. 20

**EP 2 257 380 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0446134 B1
- WO 2005102537 A
- WO 2006131629 A
- GB 909474 A
- JP 184994 A
- JP 2003001147 B